# EUROPEAN PATENT SPECIFICATION

(11) **EP 1 563 637 B1**
(45) Date of publication and mention of the grant of the patent: **03.07.2013**
(21) Application number: 03786590.4
(22) Date of filing: 05.11.2003
(51) Int. Cl.: H04L 9/00, H04N 5/00

(54) **MECHANISM FOR PROTECTING THE TRANSFER OF DIGITAL CONTENT**
MECHANISMUS ZUM SCHUTZ DES TRANSFERS VON DIGITALEM INHALT
MECANISME DE PROTECTION DU TRANSFERT DE CONTENU NUMERIQUE

(30) Priority: 05.11.2002 US 424381 P; 12.03.2003 US 388002; 21.10.2003 US 690192; 22.10.2003 US 691170
(43) Date of publication of application: 17.08.2005
(73) Proprietor: SONY ELECTRONICS, INC., Park Ridge, New Jersey 07656 (US)
(72) Inventor: CANDELORE, Brant, L., San Diego, CA 92128-3282 (US)
(74) Representative: DeVile, Jonathan Mark
(86) International application number: PCT/US2003/035334
(87) International publication number: WO 2004/042995

(56) References cited:
- US-A- 4 521 853
- US-A- 4 634 808
- US-A- 4 887 296
- US-A- 5 852 290
- US-A- 6 118 873
- US-B1- 6 278 783
- US-B1- 6 289 455
- US-B1- 6 466 671

## Description

### CROSS-REFERENCE TO RELATED APPLICATIONS

This application is a continuation-in-part Application of U.S. Application No. 10/388,002 filed March 12, 2003, which claims the benefit of priority on U.S. Provisional Application No. 60/424,381 filed on November 5, 2002.

### BACKGROUND

### 1. Field

Embodiments of the invention relate to digital devices. More specifically, one embodiment of the invention relates to a system, apparatus, descrambler and method for descrambling digital content in digital devices such as set-top boxes.

### 2. General Background

Analog communication systems are rapidly giving way to their digital counterparts. Digital television is currently scheduled to be available nationally. High-definition television (HDTV) broadcasts have already begun in most major cities on a limited basis. Similarly, the explosive growth of the Internet and the World Wide Web have resulted in a correlative growth in the increase of downloadable audio-visual files, such as MP3-formatted audio files, as well as other content.

Simultaneously with, and in part due to this rapid move to digital communications system, there have been significant advances in digital recording devices. Digital versatile disk (DVD) recorders, digital VHS video cassette recorders (D-VHS VCR), CD-ROM recorders (e.g., CD-R and CD-RW), MP3 recording devices, and hard disk-based recording units are but merely representative of the digital recording devices that are capable of producing high quality recordings and copies thereof, without the generational degradation (i.e., increased degradation between successive copies) known in the analog counterparts. The combination of movement towards digital communication systems and digital recording devices poses a concern to content providers such as the motion picture and music industries, who are reluctant in providing downloadable digital content due to fears of unauthorized and uncontrolled copying such digital content.

In response, there is a movement to require content providers, such as terrestrial broadcast, cable and direct broadcast satellite (DBS) companies, and companies having Internet sites which provide downloadable content, to introduce copy protection schemes. These desired copy protection schemes extend beyond the role of conditional access (CA), merely descrambling content to a CA-clear format for real-time viewing and/or listening, and now include constraints and conditions on the recording and playback.

Traditional CA systems for Impulse Pay-Per-View (IPPV) originated from one-way broadcast systems. A cryptographic processor, such as a smart card, in a conditional access unit, such as a set-top box, is generally infused with information and functionality in order to automatically grant access to programs. For example, a smart card with a Pay-TV access control application is adapted to receive messages that grant certain service entitlements. If the set-top box was allowed to view IPPV programs, then credit and cost limit information was transmitted as well. Likewise, when tuning to a program, the smart card received messages that described which entitlements the smart card needed in order to grant access to the program.

Currently, hackers have manipulated both types of messages in order to view programs without paying the requisite subscription fees. Not only can these messages be manipulated, but the hardware can be attacked as well. For instance, descrambling keys in the clear that are used to descramble scrambled content can be copied and sent to other set-top boxes over the Internet. Such hacking is costly to both content providers as well as the content owners.

US-A-4,634,808 discloses a system for reproducing in a descrambler of a subscriber communication network a subscriber key signal that is unique to the descrambler and was used in encrypting a key signal that must be decrypted for use in descrambling a signal received by the descrambler. The scrambled signal is received by the descrambler together with the encrypted key signal and a key generation number containing an address for accessing a predetermined area in a memory contained in the descrambler.

US 6,289,455 describes a secure cryptographic rights unit for cryptographically regulating access to digital content that includes an interface control processor and a specialized cryptographic unit that protects access to a memory. Rights keys, which allow access to content, are added by the cryptographic unit by transforming data received from the control processor and storing the result in the protected memory. The cryptographic unit then produces content decryption keys by using stored rights keys to transform other data received from the control processor. Because the control processor does not have the ability to directly access the protected memory, the security can remain effective even if the control processor is compromised.

### BRIEF DESCRIPTION OF THE DRAWINGS

Embodiments of the invention are illustrated by way of example and not by way of limitation in the accompanying drawings, in which like references indicate similar elements and in which:
Figure 1 is an example of an content delivery system including a digital device;
Figure 2 is a first example of a secure content delivery system that comprises the conditional access unit adapted to operate with a smart card;
Figure 3 is an example of a method for securely transferring descrambling keys from the smart card to the conditional access unit of Figure 2;
Figure 4 is a second example of a secure content delivery system that comprises a decoder adapted to a headend via a network connection;
Figure 5 is a more detailed illustration of the decoder adapted to the headend of Figure 4;
Figure 6A is a third example of a secure content delivery system;
Figure 6B is an example of a data structure forming the mating key generator transmitted through a secure content delivery system;
Figure 6C is an example of an entitlement management message (EMM) routed to a set-top box of the system of Figure 6A;
Figure 7 is an example of a descrambler implemented within the decoder of the set-top box of the system of Figure 6A;
Figure 8 is a fourth example of a secure content delivery system;
Figure 9A is a fifth example of a secure content delivery system;
Figure 9B is an example of an entitlement management message (EMM) routed to a set-top box of the system of Figure 9A;
Figure 9C is an example of meta-data associated with an electronic program guide (EPG) routed to the set-top box of the system of Figure 9A;
Figure 10 is an example of the descrambler implemented within the set-top box of Figure 9A;
Figure 11 is a portion of a sixth example of a secure content delivery system;
Figure 12 is an example of a portion of a seventh example of a secure content delivery system in which the digital device is adapted with copy protection functionality;
Figure 13 is an example of the decoder implemented within the digital device of Figure 12;
Figure 14 is an example of a data structure forming the copy protection key generator of Figure 12;
Figure 15 is an exemplary embodiment of an descrambler implemented within a digital device;
Figure 16 is an exemplary embodiment of a Control Word (CW) key ladder logic of the descrambler of Figure 15;
Figures 17A-17C are exemplary embodiments of a first process block of the CW key ladder logic of Figure 16;
Figures 18A-18C are exemplary embodiments of a second process block of the CW key ladder logic of Figure 16;
Figures 19A-19C are exemplary embodiments of a third process block of the CW key ladder logic of Figure 16;
Figure 20 is an exemplary embodiment of a Copy Protection (CP) key ladder logic of the descrambler of Figure 15;
Figures 21A-21C are exemplary embodiments of a fourth process block of the CP key ladder logic of Figure 20;

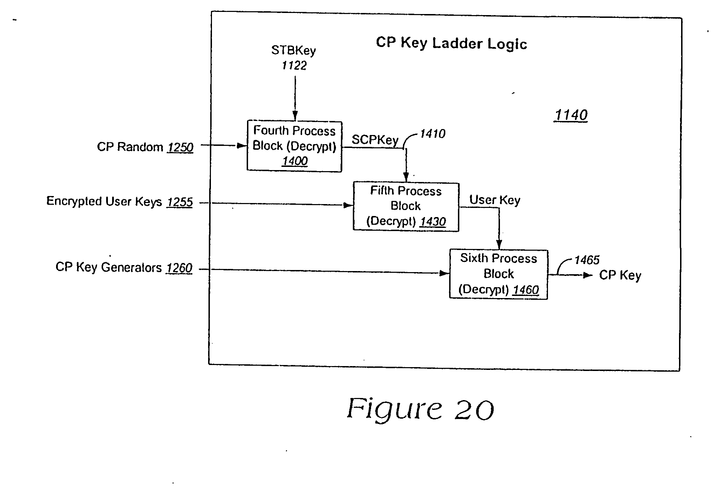

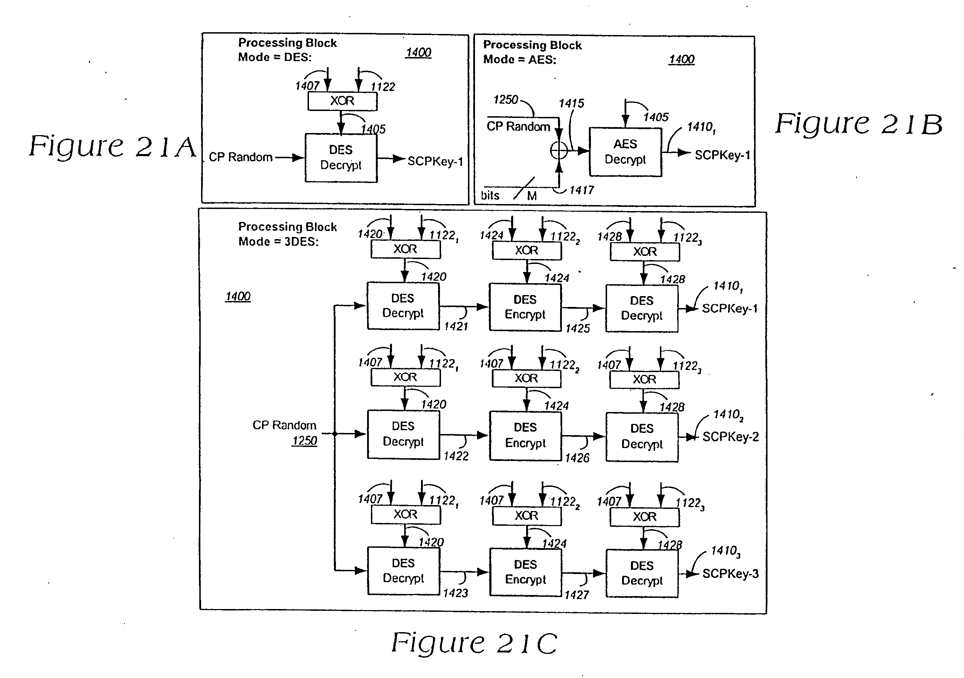

Figures 21A-21C are exemplary embodiments of a fifth process block of the CP key ladder logic of Figure 20;

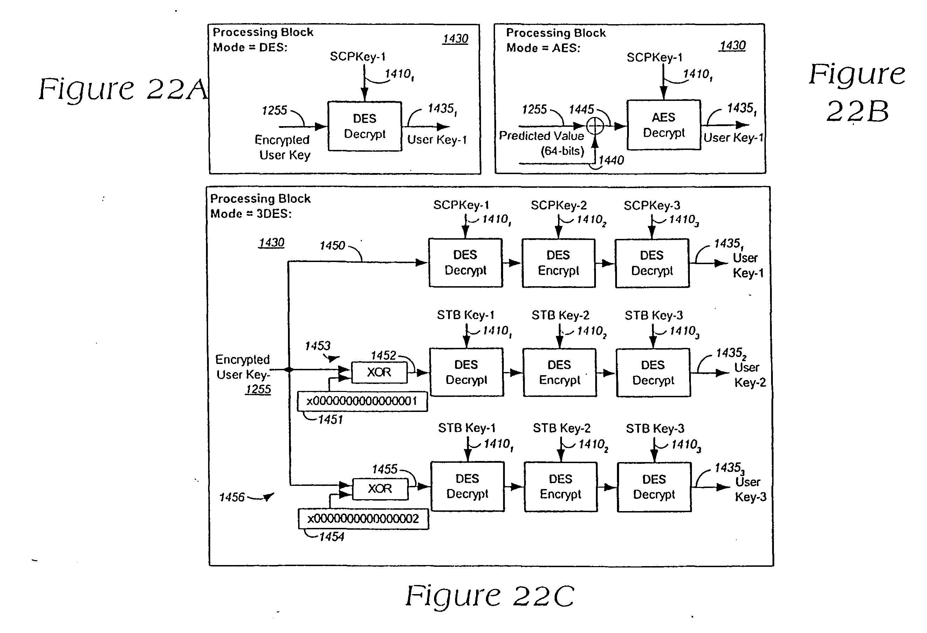

Figures 22A-22C are exemplary embodiments of a sixth process block of the CP key ladder logic of Figure 20;

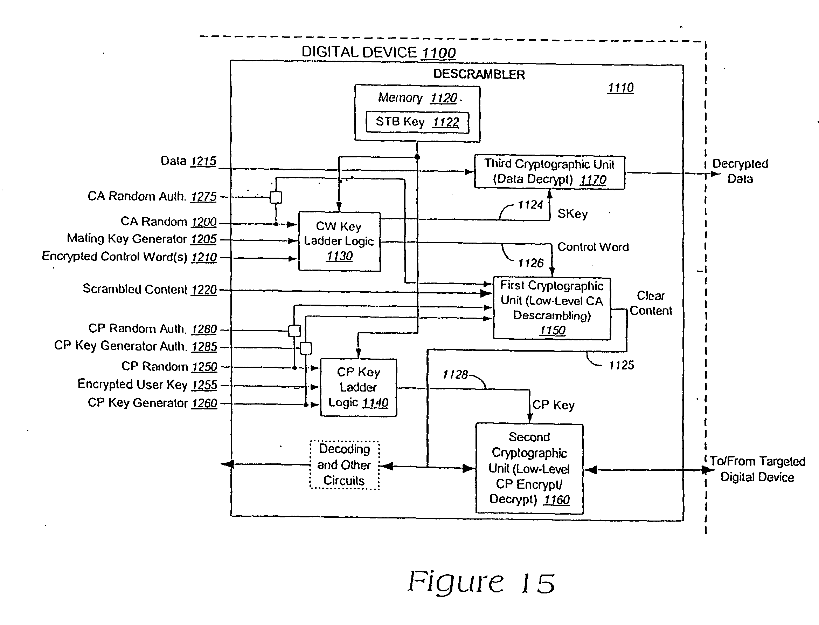

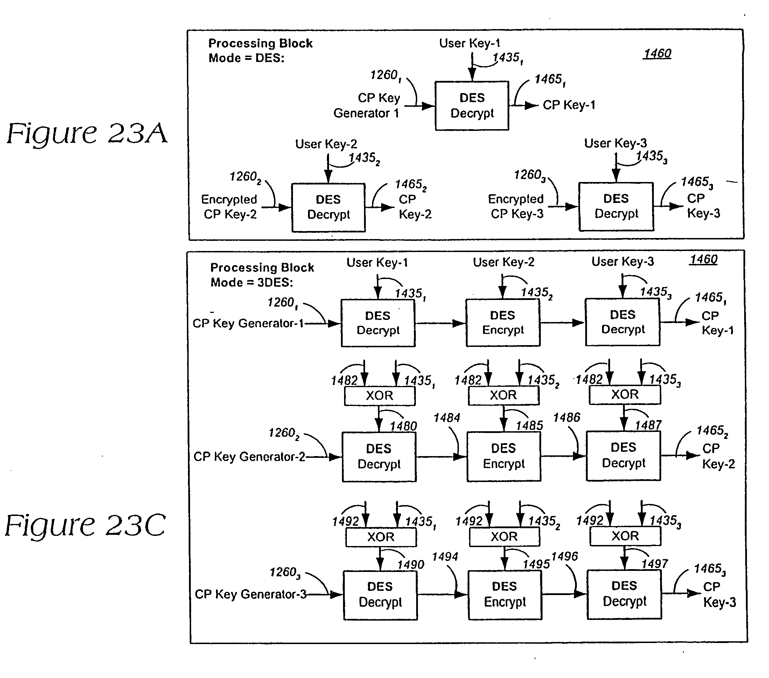

Figures 23A-23C are exemplary embodiments of a data decrypt logic of the descrambler of Figure 15; and

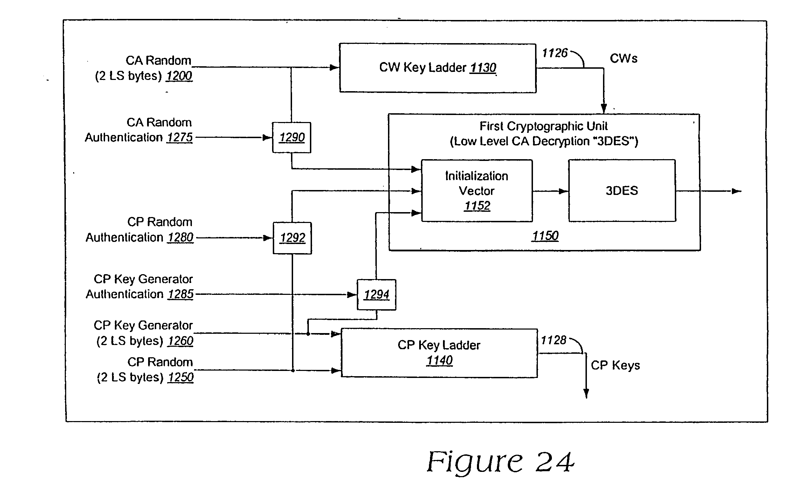

Figure 24 is an embodiment of the descrambler of Figure 15.

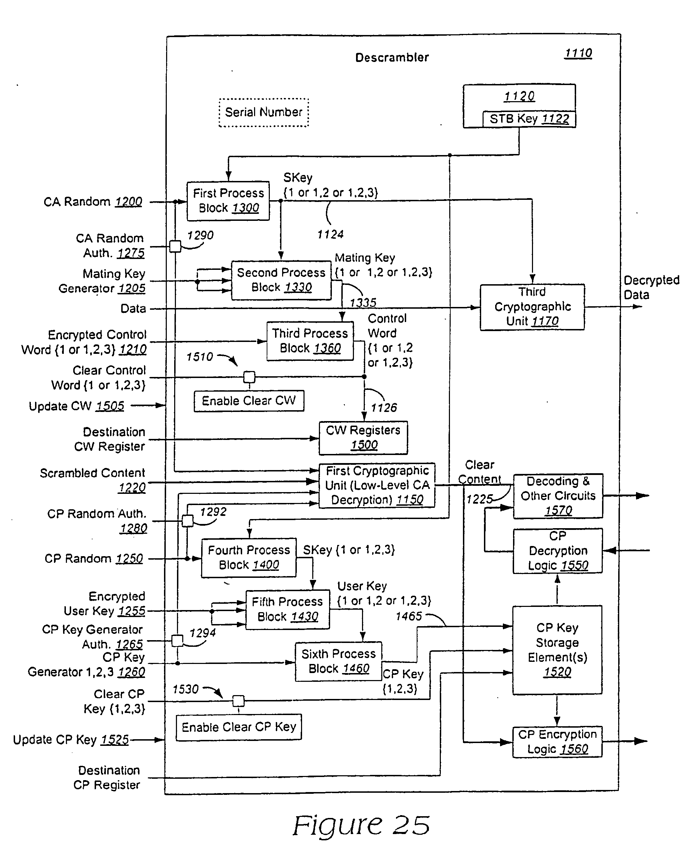

Figure 25 is a more detailed embodiment of the descrambler of Figure 24.

### DETAILED DESCRIPTION

Various embodiments of the invention relate to a descrambler for protecting the transfer of data. In one embodiment, such protection involves the descrambling and/or decrypting of digital content from one or more content providers completely within the descrambler, which can be deployed as a singe integrated circuit. Examples of a "content provider" include, but are not limited to a terrestrial broadcaster, cable operator, direct broadcast satellite (DBS) company, a company providing content for download via the Internet, or any similar sources of content.

In the following description, certain terminology is used to describe features of the invention. For instance, both terms "component" and "logic" are representative of hardware and/or software configured to perform one or more functions. Examples of "hardware" include, but are not limited or restricted to an integrated circuit such as a processor (e.g., microprocessor, application specific integrated circuit, a digital signal processor, a microcontroller, etc.), finite state machine, combinatorial logic or the like.

The term "logical derivative" is a result produced by performing a logical operation (e.g., Exclusive OR "XOR", AND, OR, Invert, or any combination thereof) on a digital signal. The logical operation may be performed in a bitwise manner, although it is contemplated that the logical operation may be performed on multiple bits concurrently.

The term "process block" represents hardware and/or software having a dedicated function, such as a finite state machine for example. An example of "software" includes a series of executable instructions in the form of an application, an applet, or even a routine. The software may be stored in any type of machine readable medium such as a programmable electronic circuit, a semiconductor memory device such as volatile memory (e.g., random access memory, etc.) and/or non-volatile memory (e.g., any type of read-only memory "ROM", flash memory), a floppy diskette, an optical disk (e.g., compact disk or digital video disc "DVD"), a hard drive disk, tape, or the like.

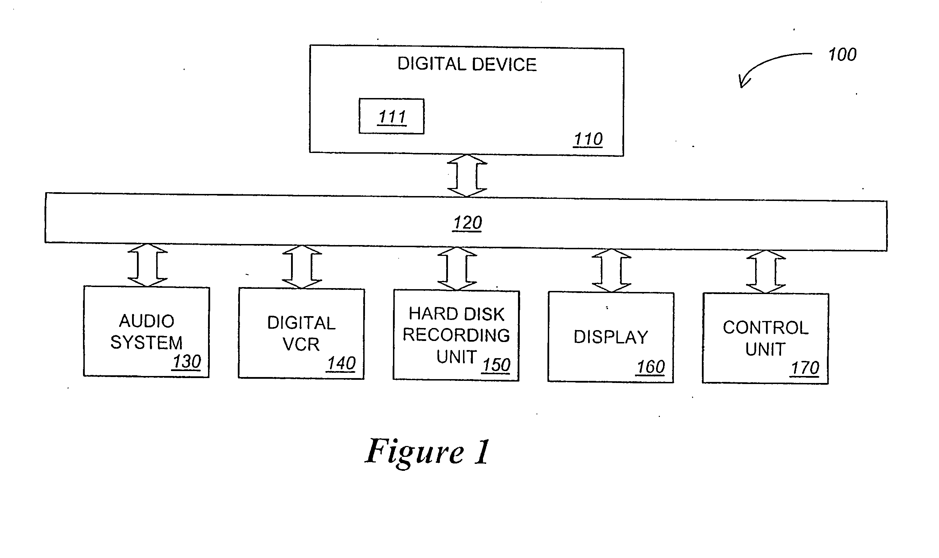

Referring to Figure 1, an example of a content delivery system 100 is shown. Content delivery system 100 includes a digital device 110 that receives information including program data from one or more content providers. The program data may be propagated as a digital bit stream for example. Digital device 110 may operate as any number of electronic products (or one or more components integrated therein) 2such as a set-top box, a television, computer, audio-playback device (e.g., digital radio, MP3 player), audio-recording device, video-recording device (e.g., digital recorder), or the like.

For instance, digital device 110 may be configured in accordance with an embedded architecture, a split security architecture, or an external security architecture. As an embedded architecture, in one example, digital device 110 is implemented as a set-top box or another electronic product that comprises fixed, internal circuitry supporting both entitlement management and descrambling operations.

Alternatively, in accordance with a split security architecture, digital device 110 may be adapted to receive a removable smart card that handles entitlement management, while descrambling of digital content is controlled by internal circuitry.

Yet, in accordance with an external security example, digital device 110 may be a "point-of-deployment" product with a network card handling both entitlement management and descrambling operations by sending and receiving messages over an Out-of-Band channel. Of course, external security type may also be split so that the network card handles descrambling operations, but adapted to communicate with a smart card for handling entitlement management. These and other examples of digital device 110 may be implemented while still falling within the scope of the invention.

Digital device 110 comprises a receiver 111, which processes the incoming information, extracts the program data inclusive of the digital content therefrom, and provides the digital content in a perceivable format (e.g., viewable and/or audible). The "program data" comprises any or all of the following: system information, entitlement control message(s), entitlement management message(s), or digital content. The "digital content" in the program data stream may include an image, audio, video or any combination thereof. The content may be in a scrambled or clear format.

Herein, "system information" may include information on program names, time of broadcast, source, and a method of retrieval and decoding, as well as copy management commands that provide digital receivers and other devices with information that will control how and when the digital content may be replayed, retransmitted and/or recorded. These copy management commands may also be transmitted along with an entitlement control message (ECM), which is generally used to regulate access to a particular channel or service. An "Entitlement Management Message" (EMM) may be used to deliver entitlements (sometimes referred to as "privileges") to digital receiver 111. Examples of certain entitlements may include, but are not limited to access rights or descrambling keys. A descrambling key is generally a code that is required by descrambler logic to recover data in the clear from a scrambled format based on the entitlements granted.

As shown, when implemented as a set-top box, digital device 110 may be coupled to other components in content delivery system 100 via a transmission medium 120. The transmission medium 120 operates to transmit program data between digital device 110 and other components in content delivery system 100. The transmission medium 120 may include, but is not limited to electrical wires, optical fiber, cable, a wireless link established by wireless signaling circuitry, or the like.

Depending on the type of product corresponding to the digital device 110, content delivery system 100 may include an audio system 130 coupled to the transmission medium 120. A digital VCR 140, such as a D-VHS VCR, may also be coupled to the digital device 110 and other components of the content delivery system 100 through the transmission medium 120.

A hard disk recording unit 150 may also be coupled to digital device 110 and other components via transmission medium 120. Display 160 may include a high definition television display, a monitor, or another device capable of processing digital video signals. Finally, a control unit 170 may be coupled to the transmission medium 120. Control unit 170 may be used to coordinate and control the operation of some or each of the components on content delivery system 100.

The digital content of the program data may be transmitted in scrambled form. In one example, as part of the program data, access requirements may be transmitted along with the scrambled content to digital device 110 (e.g., set-top box) that is implemented with receiver 111 thereby functioning as a conditional access unit. An "access requirement" is a restrictive parameter used to determine if digital device 110 implemented with conditional access functionality, hereinafter referred to as the "conditional access unit 110," is authorized to descramble the scrambled content for viewing or listening purposes. For example, the access requirement may be a key needed to perceive (view and/or listen to) the content, a service tag associated with a given content provider, or even a particular descrambling software code.

When a scrambled program is received by conditional access unit 110, the access requirements for the program are compared to the entitlements that conditional access unit 110 actually has. In order for conditional access unit 110 to display the scrambled content in clear form, in one example, the access requirements associated with the digital content are compared to the entitlements of conditional access unit 110. The entitlements may state that conditional access unit 110 is entitled to view/playback content from a given content provider such as Home Box Office (HBO), for example. The entitlements may also include one or more keys needed to descramble the digital content. The entitlements also may define the time periods for which conditional access unit 110 may descramble the digital content.

Thus, in one example, access requirements and entitlements form a part of the access control system to determine whether a conditional access unit or even a decoder is authorized to view a particular program. It is contemplated that the description below focuses on mechanisms to recover audio/visual content such as television broadcasts, purchased movies and the like. However, it is contemplated that the invention is also applicable to the descrambling of audible content only (e.g., digitized music files).

The access requirements and entitlements can provide consumers with a variety of choices for paying for the content and gaining access to the scrambled content. These choices may include pay per play (PPP), pay per view (PPV), impulse pay per view (IPPV), time based historical, pay per time (PPT). "Impulse pay per view" is a feature which allows purchase of PPV movies through credit that has been previously downloaded into the set-top box. Purchase records may be stored and forwarded by phone to a billing center. "Time based historical" allows access to content that was delivered during a past time period, such as March through December, 1997, for example. The access requirements and entitlements can also provide consumers with different options for storing the scrambled content.

The access requirements may be delivered to the conditional access unit, located within digital device 110 or coupled thereto over transmission medium 120, using packet identifiers (PIDs). Each PID may contain the access requirements associated with a given service. The content that is delivered to the conditional access unit may also include a large number of PIDs, thus enabling special revenue features, technical features, or other special features to be performed locally.

Before receiving the content, the customer may be given a number of choices for gaining access to the digital content that is going to be stored to media. The customer may be required to purchase the right to access and view the content. Therefore, if the customer wants to record the content for later retrieval and viewing, the access requirements that the customer bought also need to be stored with the digital content.

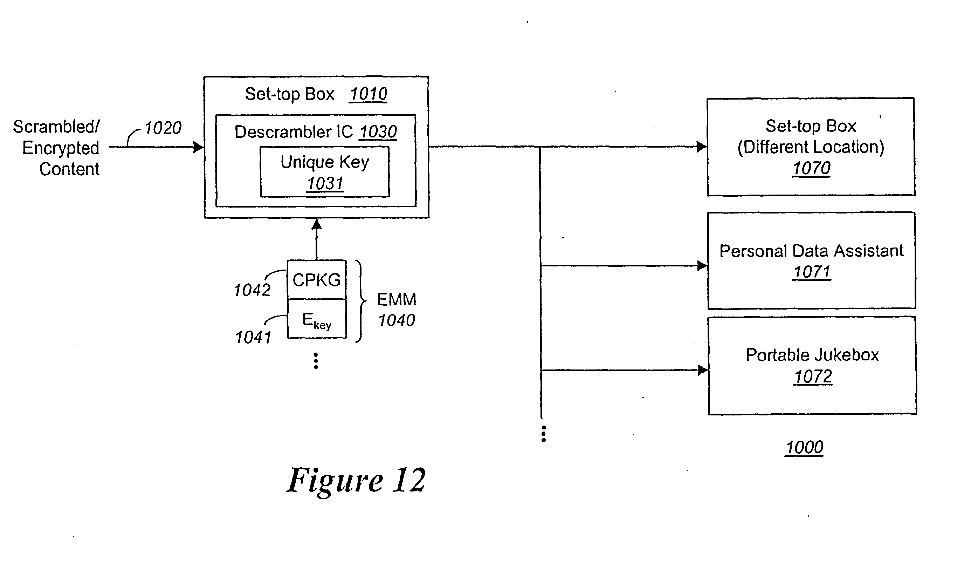

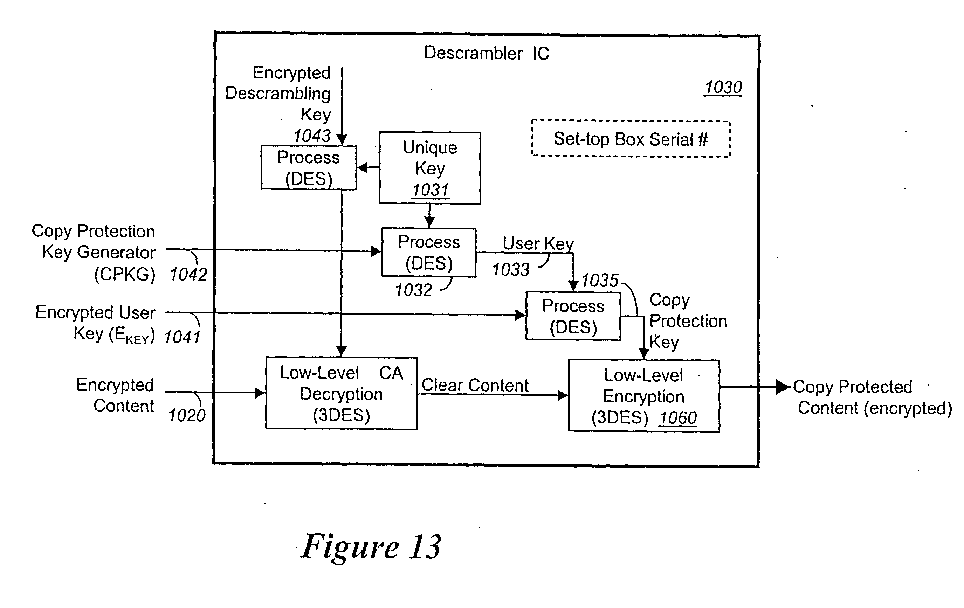

In addition, there may be copy-protection applied to the descrambled digital content (e.g., transport stream) as shown in Figures 12 and 13. Copy-protected digital content will be re-scrambled across an interface interconnecting a destination interface and a source. The source and destination interface need to agree on the key used to re-encrypt this content. This copy protection key can be encrypted with the unique key associated with the digital device. The unique key can be received through an EMM or other method, e.g. factory load procedure.

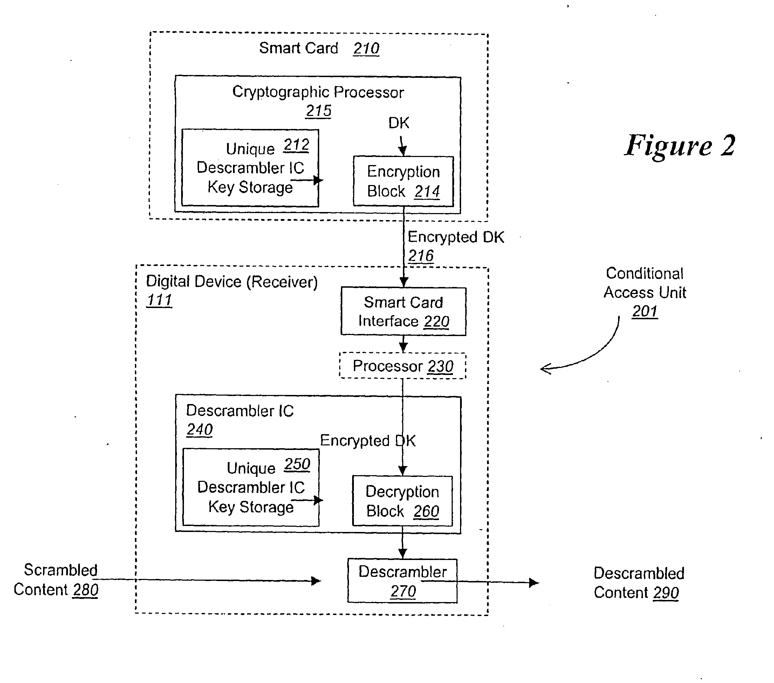

As seen in Figure 2, an example of a secure content delivery system that comprises a conditional access unit 201 adapted to operate with a smart card interface 220 is shown. This example is consistent with a split security architecture and an external security architecture. In a split security architecture implementation, digital device 110 operates as a conditional access unit 201 (e.g., equivalent to conditional access unit 110 of Figure 1), but is implemented as a set-top box or other type of digital device.

Although smart card interface 220 may be built into digital receiver 111, it is expected that digital receiver 111 will have an expansion slot, such as a PCMCIA slot or Universal Serial Bus (USB) slot for example, to receive a smart card 210 complementary to interface 220. For this example, digital receiver 111 comprises an optional processor 230 and a descrambler 240. Herein, for this example, descrambler 240 is implemented as an integrated circuit (IC).

Smart card interface 220 is adapted for attachment to smart card 210, which stores one or more encrypted descrambling keys for descrambling incoming digital content. Smart card 210 transmits the descrambling key(s) in encrypted form to smart card interface 220. In order to protect the descrambling key(s), generally referred to as "DK," from being improperly extracted by an interloper monitoring communications between smart card 210 and smart card interface 220, smart card 210 may use an encryption key unique to conditional access unit 201 to encrypt the DK. This allows conditional access unit 201 to decrypt the DK in a secure manner and use the DK in a clear format to descramble the digital content.

More specifically, according to one example of the invention, an external cryptographic processor 215 of smart card 210, receives the DK needed to descramble content. A storage element 212 (e.g., volatile or non-volatile memory) is previously loaded with one or more keys for encrypting the DK. Such loading may be performed during manufacture of smart card 210, during manufacture of storage element 212 or by cryptographic processor 215 when storage element 212 is on-chip. Encryption logic 214 of smart card 210 encrypts the DK with the one or more keys that are unique to descrambler 240.

For this example, smart card 210 delivers the encrypted DK 216 to descrambler 240. Herein, processor 230 receives encrypted DK 216 through interface 220, although encrypted DK 216 may be sent directly to decryption logic 260. Processor 230 may be implemented to perform additional operations to counteract additional obfuscation techniques performed on the DK.

Decryption logic 260 of descrambler 240 will decrypt the DK using one or more unique keys stored in a storage element 250. In one example, storage element 250 comprises one or more key registers loaded at manufacturer or after implemented within conditional access unit 201 through initial program data transmitted to conditional access unit 201. Decryption logic 260 then writes the decrypted DK alternately into.ODD and EVEN key storage elements (not shown) of descrambler logic 270.

Descrambler logic 270 then applies the ODD/EVEN descrambler key(s) to the incoming scrambled content 280 at the right time and outputs descrambled program content 290. Of course, alternatives to the loading of ODD and EVEN key storage elements may be utilized for descrambling of incoming scrambled content 280. Descrambler logic 270 may be implemented as internal logic of the descrambler 240 or externally as illustratively shown.

Thus, the transfer of the descrambling key from smart card 210 to conditional access unit 201 is secure, because the descrambling key is transferred in encrypted form. The descrambling key remains secure in conditional access unit 201 because the descrambling key is not decrypted by non-secure processor 230. The descrambling key is only decrypted in descrambler 240 that actually uses the descrambling key, and thus, the descrambling key is never exposed in the clear, and cannot be obtained by hackers.

Furthermore, the key used to decrypt the encrypted DK 216 is stored in hardware (e.g., storage element 250) of descrambler 240. Storage element 250 cannot be hacked unless the silicon of storage element 250 is probed. Furthermore, the key may only be valid for one particular conditional access unit 201, and may not be used by other units to decrypt the encrypted DK 216, because the DK is encrypted by smart card 210 using a key that is unique to an associated conditional access unit 201. Therefore, the transmission of the encrypted DK 216 to conditional access unit 201 is secure.

Descrambler 240 handles the secure processing of the descrambling keys. This descrambler 240 has no CPU, no firmware, and no software. There is no complicated key hierarchy. A non-processor based descrambler 240 receives encrypted DK 216, applies a unique key to it, and decrypts it. No instructions, no code, no hashing, and no software is loaded into decryption logic 260. The decryption is performed entirely by decryption logic 260 being a hardware circuit or state machine using only a single key function.

One or more unique keys, generally referred to herein as "Unique Key," may be programmed into storage element 250 during manufacture or during implementation within a set-top box, television, or NRSS-B module. For example, in one example, descrambler 240 is implemented with a programmable non-volatile storage element 250 such as flash. In another example, descrambler 240 is implemented with non-programmable, non-volatile memory that can be written only once in order to enhance security. As a result, there is no way to either improperly read or overwrite the Unique Key that is originally loaded into storage element 250. An association between the serial number of conditional access unit 201 and the Unique Key loaded into descrambler 240 of the conditional access unit 201 may be recorded.

When conditional access unit 201 is manufactured and a smart card 210 is installed, smart card 210 can receive the Unique Key associated with conditional access unit 201 at the time of pairing. From then on, smart card 210 is "paired" to that particular host (e.g., conditional access unit 201). Later, if smart card 210 is ever replaced or moved to a new host, smart card 210 may be adapted to receive a unique key associated with the new host via an Entitlement Management Message (EMM). Of course, as an alternative, a new smart card with a newly programmed unique key may also be delivered to the user.

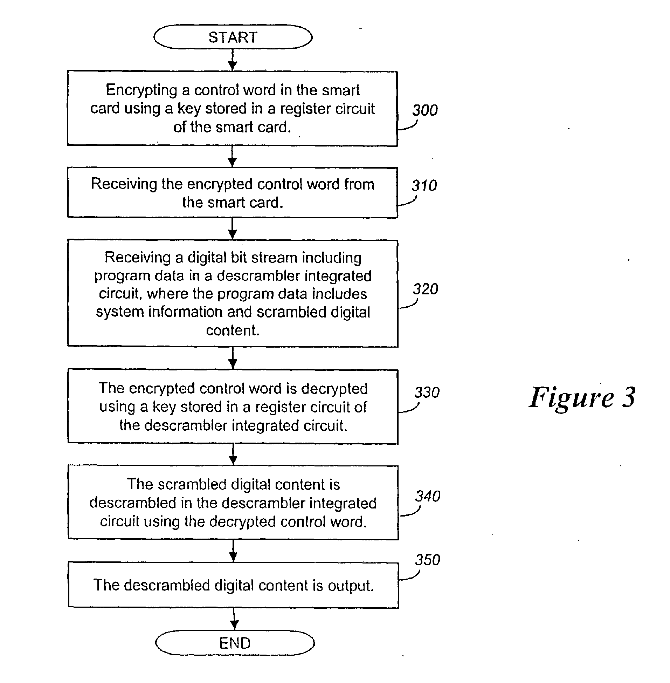

An exemplary method for transferring a descrambling key from smart card 210 to conditional access unit 201 of Figure 2 is shown in Figure 3. A descrambling key is encrypted in the smart card using a key stored in non-volatile memory of the smart card (block 300). This key stored in the smart card, namely the Unique key, is associated with the key stored in the storage element of the descrambler. The encrypted descrambling key is received from the smart card (block 310).

This method includes receiving a digital bitstream including program data in a descrambler, where the program data includes system information and scrambled digital content (block 320). The encrypted descrambling key is decrypted using a key stored in a storage element of the descrambler (block 330). The scrambled digital content is descrambled in the descrambler using the decrypted descrambling key (block 340), and the descrambled digital content is output (block 350).

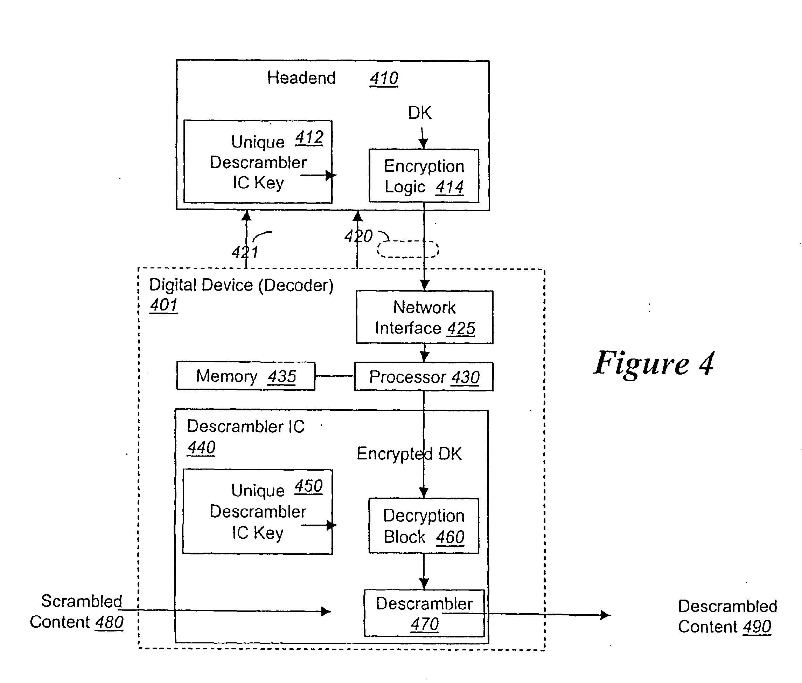

As an alternative example to the conditional access unit implementation of Figure 2, the smart card may be replaced by a headend server (hereinafter referred to as "headend") 410 of a one-way or two-way network 420 as shown in Figure 4. Headend 410 maintains the access rights for the digital device operating as a decoder (e.g., "decoder 401), instead of maintaining such access rights in a local cryptographic processor 215 of smart card 210 of Figure 2.

headed 410 can deliver one or more service keys (generally referred to as "Service Key") based on the Unique Key stored in descrambler 440. The encrypted Service Key may be stored locally in decoder 401 to facilitate transitions from one channel to another. The Service Key is stored in encrypted form, and is loaded as needed into descrambler 440. The Service Key is decrypted within descrambler 440, by using the Unique Key stored in a storage element 450 of descrambler 440.

In one example of the invention, the Service Key is used as a descrambling key to descramble the content directly. In another example of the invention, the Service Key is used to decrypt one or more descrambling keys, which are received in-band with the scrambled content and subsequently used for descrambling purposes. Each key of the Service Key may be encrypted using different public and proprietary encryption algorithms. These different proprietary algorithms may be considered as any-piracy measures to invalidate clone hardware.

Headend 410 can deliver the Service Key on a channel or "tier of service" basis in the EMMs. The Service Key is encrypted, stored locally in decoder 401, and used by a processor 430 as needed when tuning to different channels. While this example works in one-way (non-IPPV) broadcast networks, it also performs in two-way, interactive networks, where the Service Key for a particular service is requested, such as IPPV or VOD purchases or any other non-subscription service. A return channel 421 is used to request the Service Key because the ability to grant access to a new service is performed by headend 410 instead of a local controlling cryptographic processor.

In order to avoid overload problems at headend 410 caused by a large number of simultaneous impulse buys of IPPV programs, a Free Preview period can be determined and IPPV programs can be marketed in advance of the actual viewing. In this example, the Service Key for individual shows or movies may be requested by decoder 401 and delivered ahead of time. For example, interactive networks, such as a cable system having return channel 421 such as a DOCSIS modem or Out-of-Band transmitter/receiver for example, can deliver a Request for Program Key (RPK) message from decoder 401 to headend 410. Alternatively, decoder 401 may request the Service Key in real-time for each program accessed.

A controller (not shown) on headend 410 processes the RPK message. The RPK message may contain an address of decoder 401 as well as information needed to identify the channel to be viewed (all of which may be obtained from Motion Picture Experts Group "MPEG" system and program information already processed by the insecure processor). The RPK request may be encrypted, if desired, for non-repudiation and prevention of denial of service attacks, such as IPPV or VOD requests for example.

Upon receipt of the RPK message, headend 410 accesses entries of an access control list (listing each entitlement of decoder 401) and verifies decoder 401 is authorization to receive a particular Service Key. If authorized, headend 410 sends the Service Key (encrypted using the Unique Key contained in storage element 450 located in descrambler 440) to decoder 401.

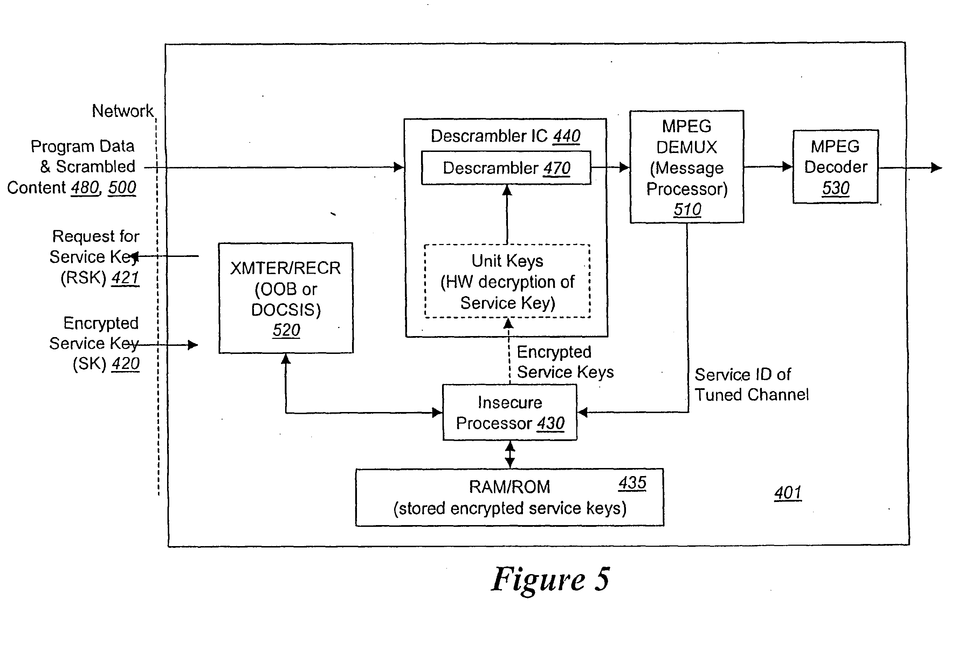

Figure 5 provides a more detailed illustration of decoder 401 of Figure 4 adapted to headend 410 for request and receipt of the Service Key. According to one example of the invention, program data 500 such as an Entitlement Control Message (ECM) or meta-data associated with an Electronic Program Guide (EPG) is provided to decoder 401 by a content provider. The program data 500 is adapted to convey at least an identifier of the desired channel or ervice (referred to as "Channel or Service ID"). In the event that program data 500 is an IPPV or VOD program, program data 500 may further include a Program identifier (PID).

An MPEG Demultiplexer 510 operates as a message processor to extract the Channel or Service ID. The Channel or Service ID are routed to processor 430, which in combination with transmitter/receiver logic 520 generates the RSK message 421 for routing to headend 410 over return channel 421.

In response, the requested Service Key (SK) in an encrypted format is received by the transmitter/receiver logic 520, which provides the SK to processor 430. Processor 430 may store the SK in a memory 435 and/or provide the SK to descrambler 440 for descrambling incoming scrambled content in real-time. For instance, memory 435 is an optional component for use if it is desirable to storage the SK locally.

Upon receiving the scrambled content of the program data, descrambler 440 descrambles such content, which is subsequently supplied to MPEG decoder 530 if the content is compressed with a MPEG format. MPEG decoder 530 decompresses the digital content and subsequently routes the decompressed digital content to either a digital-to-analog (D/A) converter for display on a television, a Digital Video Interface (DVI) link or a network interface (e.g., IEEE 1394 link).

As shown, processor 430, memory 435, descrambler 440, MPEG Demultiplexer 510, transmitter/receiver logic 520 and MPEG decoder 530 may be implemented on two or more integrated circuits interconnected through bus traces or another communication scheme (e.g., wires, optical fiber, etc.). Alternatively, these components may be implemented on a single integrated circuit.

In this example, the SK may be valid for a certain period of time. Decoder 401 may store the SK in memory 435, allowing decoder 401 to re-access the service with if SK is still valid without having to request that Service Key again. In this example, the SK is stored in encrypted form (as it comes over the network from headend 410) in memory 435.

The SK may be valid for the duration of a program or it may be valid for a selected period of time, e.g. 6 hours. Using a key for a longer period of time will reduce the overall number of transactions between decoder 401 and headend 410 because, once SK is stored in memory 435 of decoder 401, it is readily available. Depending on the duration of the current Service Key (e.g., SK), the next Service Key (SKₙₑₓₜ) may be delivered along with the SK. Alternatively, decoder 401 may request the SKₙₑₓₜ after detecting the end of the SK's valid Epoch (e.g., time duration of the SK). In different examples, the Service Key may be valid for a duration of a user's subscription period.

Services can be sold a-la-carte or sold as a package. There may be several tiers of services, each identified by a Service ID. For example, there may be a basic tier of services, a medium tier offering more services, and advanced tiers offering different premium services. Each incremental tier of services may be given a separate Service Key.

In summary, decoder 401 of Figure 4 comprises a descrambler 240 with a Unique Key loaded during IC manufacturer or creation of decoder. Service Keys are delivered to decoder 401 encrypted by the Unique Key and stored in encrypted form in decoder 401. Alternatively, decoder 401 could request a Service Key each time that decoder 401 tunes to a channel without storing the Service Key(s} locally.

The entitlements normally held by the secure cryptographic processor of Figure 2 are held by the controlling authority such as a key server in headend 410 of Figure 4 for example. Processor 430 in decoder 401 may receive a message (e.g., an ECM or an EMM), which tells it what it is authorized to descramble so that it may properly display viewing options to a viewer. Processor 430 can then request Service Keys for selected channels.

There is no embedded "secure" firmware or software. Using the hardware decryption circuit mentioned above, an embedded processor core or firmware that performs a cryptographic function is not needed. This enables a number of conditional access applications, which may be downloaded to the insecure processor. The Service Key is unit key encrypted. It may be a public asymmetric key or secret symmetric key.

Additional advantages include Pay-TV applications without using a cryptographic processor by providing decoder 401 having descrambler 440 with Unique Keys hardwired therein. Decoder 401 can request a Service Key or descrambling key from a network provider. Local access control can be performed by processor 430 because the critical "secure" function is isolated in descrambler 440.

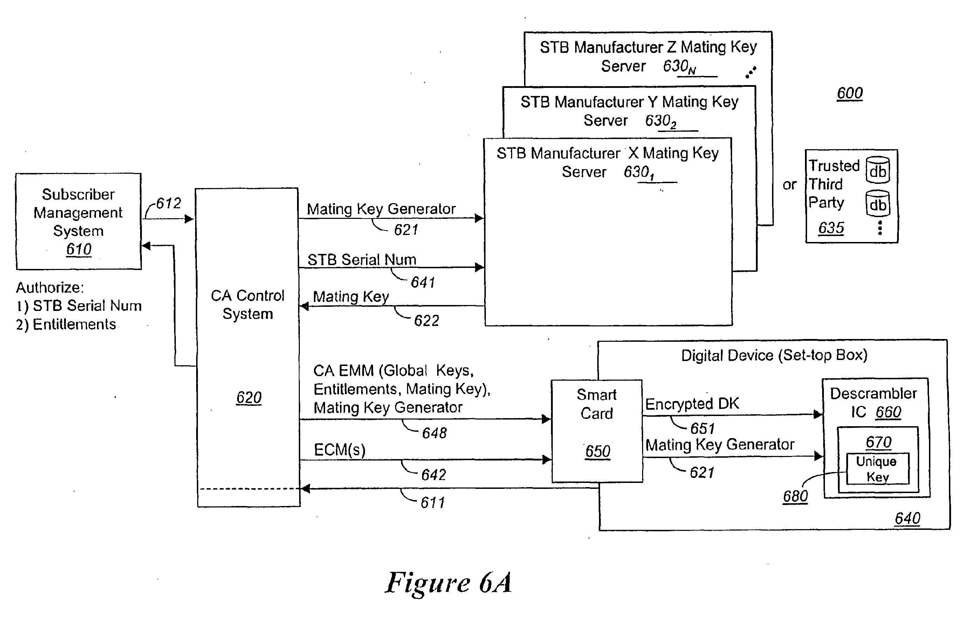

Referring now to Figure 6A, an example of a secure content delivery system 600 is shown. Secure content delivery system 600 comprises a' subscriber management system 610, a Conditional Access (CA) control system 620, a plurality of mating key servers associated with different digital device (e.g., set-top box) manufacturers 630₁-630_{N} (N≥2) and a digital device (e.g., set-top box) 640 adapted to receive a smart card 650. Smart card 650 communicates with a descrambler 660, which includes local memory 670 configured to store a unique key (referred as "Unique Key") 680 of set-top box 640. Unique Key 680 is loaded during IC manufacturer or creation of set-top box 640.

Once a user of set-top box 640 desires to receive particular program data, set-top box 640 determines whether entitlements associated with the requested program data are already stored therein. If the entitlements are not stored, the user may be notified by a screen display and prompted to issue a request 611. Request 611 may be provided by the user via (i) an out-of-band communication pathway (e.g., electronic mail over the Internet, telephone call by the user, etc.) or (ii) an in-band communication pathway to CA control system 620 in communication with set-top box 640 as shown. Alternatively, request 611 may be sent automatically or may be routed to CA control system 620 which performs a lockup of information to authorize the user substantially in real time.

For one example, request 611 is a message that comprises an identifier (e.g., an alphanumeric , or numeric code) of the requested content, a serial number of set-top box (referred to as "STB Serial Num") and/or an identifier of smart card 650 (referred to as "Smart Card ID"). Implemented as any information processing system (e.g., server, relay station or other equipment controlled by a service provider or content provider), subscriber management system 610 processes request 611 and determines what entitlements are to be provided to set-top box 640. Although not shown, it is contemplated that CA control system 620 could be configured to perform a lookup of databases containing serial numbers of set-top boxes or smart card IDs, thereby eliminating access to subscriber management system 610.

Upon receiving an authorization (AUTH) message 612 from subscriber management system 610, which may include the STB Serial Num and perhaps global keys (e.g., keys used to decrypt ECMs sent in-band with the content), CA control system 620 routes STB Serial Num 641 and a mating key generator 621 to at least one of the mating key servers 630₁..., or 630_{N} (generally referred to as "mating key server 630ᵢ," where i≥1). CA control system 620 operates as an intermediary to coordinate delivery of a mating key 622 that is used to recover digital content from downloaded, scrambled content. CA control system 620 may be implemented as a headend, a broadcast station, a satellite uplink or the like.

Alternatively, instead of CA control system 620 routing mating key generator 621 and STB Serial Num 641 to a mating key servers 630₁-630_{N}, it is contemplated that such information may be sent to a trusted third party 635, which maintains and controls access to databases featuring mating keys. The values associated with mating key generator 621 and/or STB Serial Num 641 are used to retrieve mating key 622. "Trusted third party" 635 may include, but is not limited or restricted to a governmental entity, a company independently managed from any manufacturer, or the like.

Prior to transmission of STB Serial Num 641 and mating key generator 621, CA control system 620 may perform an authentication scheme with a selected mating key server, such as server 630₁, in order to establish a session key between CA control system 620 and mating key server 630₁. Of course, the authentication scheme would be performed with trusted third party 635 if implemented in lieu of mating key server 630₁. The session key can be used to encrypt information exchanged between the parties in order to provide a secure link there between. Examples of various types of authentication schemes include an exchange of digital certificates, digital signatures, hash values or the like.

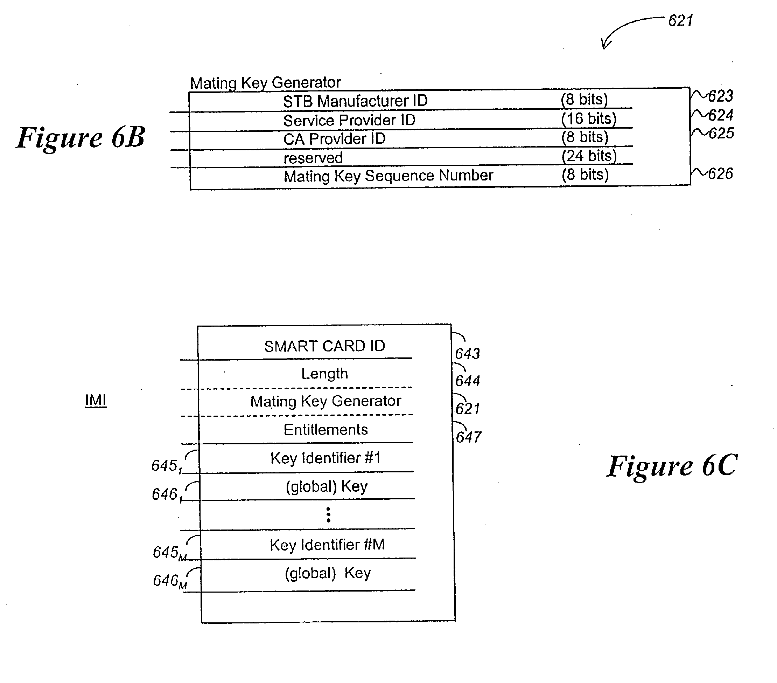

As shown in Figure 6B, mating key generator 621 is a message that comprises one or more of the following: a Set-Top-Box Manufacturer identifier (STB Manufacturer ID) 623, a Service Provider ID 624, a conditional access (CA) Provider ID 625 and a Mating Key Sequence Number 626. Of course, the size (in bits) of these values/fields can be varied.

For this example, "STB manufacturer ID" 623 is a predetermined value that identifies a manufacturer of set-top box 640. Of course, it is contemplated that STB manufacturer ID 623 is optional, depending on the particular arrangement of STB Serial Num 641. "Service Provider ID" 624 is a value (e.g., one or more bits such as 16-bits) that identifies the communication system provider as well as the selected distribution mechanism. For example, Service Provider ID 624 may identify which cable, satellite, terrestrial or Internet company is supplying the requested program data and/or the particular head-end server of that company. "CA Provider ID" 625 indicates the provider of CA control system 620. "Mating Key Sequence Number" 626 is used for reordering packets of information if mating key 622 is more than one packet in length, and in certain systems, may also be used to indicate expiration of mating key generator 621.

Referring back to Figure 6A, STB Serial Num 641 may have a unique portion for each STB Manufacturer ID 623 in order to identify mating key server 630_{1,} ..., or 630_{N} (or database of trusted third party 635) to which access is sought. Alternatively, STB Serial Num 641 may be expanded to include a serial number of set-top box 640 as well as a code field to identify the manufacturer of that set-top box 640. Of course, the number of bits is a design choice.

Upon receipt of mating key generator 621 and STB Serial Num 641, the appropriate mating key server (e.g., server 630ᵢ, where i≥1) returns mating key 622. In this example, mating key 622 is used to encrypt a descrambling key needed to descramble scrambled content being sent to set-top box 640. More specifically, mating key server 630ᵢ accesses a pre-stored key being an identical copy of Unique Key 680 and encrypts mating key generator 621 using the accessed key. This produces a key equivalent to mating key 622. Alternatively, it is contemplated that mating key generator 621 may undergo a one-way hash operation in which the result is encrypted or only a portion of mating key generator 621 may be encrypted to produce mating key 622. A similar operation needs to be repeated, however, within descrambler 660.

Upon receipt of mating key 622, CA control system 620 generates an entitlement management message (EMM) 648 along with one or more ECMs 642 sent to smart card 640. One example of EMM 648 is illustrated in Figure 6C.

As shown in Figure 6C, EMM 648 comprises at least two of the following: Smart Card ID 643, length field 644, mating key generator 621, "M" (M≥1) key identifiers 645₁-645_{M} and keys 646₁-646_{M} associated with key identifiers 645₁-645_{M}, respectively. Of course, other entitlements 647 may be included in EMM 648. Also, it is contemplated that mating key generator 621 may be excluded from EMM 648 and sent separately and generally concurrent with EMM 648.

In particular, with respect to Figure 6C, smart Card ID 643 is a bit value that is used to indicate a particular set-top box and perhaps the manufacturer of the set-top box. "EMM length field" 644 is a bit value that is used to indicate the length of EMM 648. Mating key generator 621, as shown, is a bit value that includes the parameters forth above in Figure 6B. Each "key identifier" 645₁-645_{M} is a 16-bit entitlement tag value that is signed for use in checking whether keys 646₁-646_{M} have been illicitly altered. Keys 646₁-646_{M} are used to decrypt ECMs 642 used to deliver access requirements and at least one descrambling key in an encrypted format.

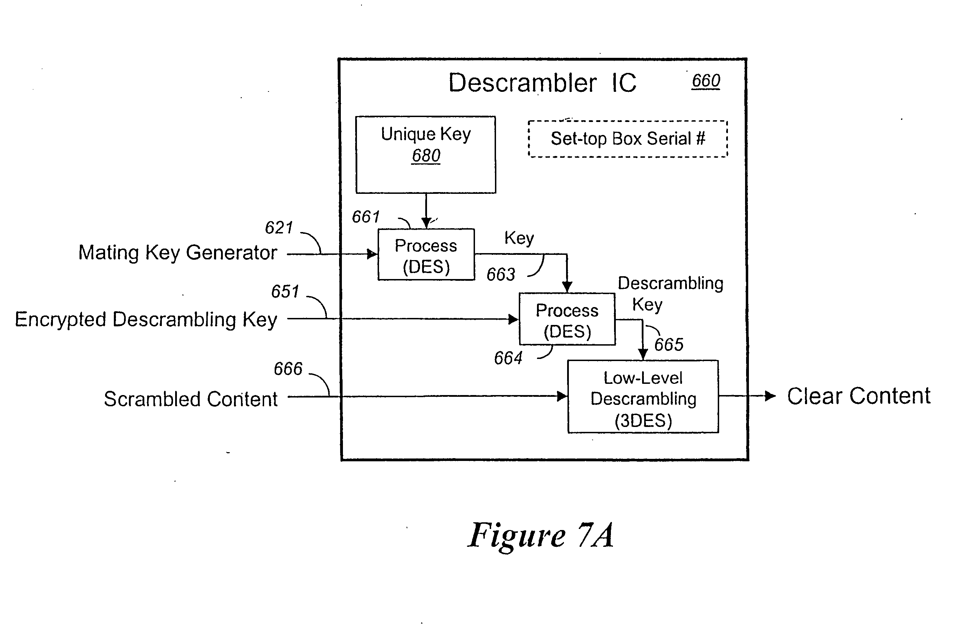

Smart card 650 receives EMM 648 and forwards mating key generator 621 and an encrypted descrambling key 651 recovered from ECM 642 to descrambler 660 of set-top-box 640 as described in Figures 7A-7C.

Figure 7A is an example of descrambler 660 implemented within set-top box 640 of Figure 6A. On receipt of mating key generator 621 and encrypted descrambling key 651 from smart card 650, descrambler 660 comprises a first process block 661 that performs an encryption operation on mating key generator 621 using Unique Key 680 stored in descrambler 660. The encryption or decryption operations associated with the process blocks may be performed in accordance with a cryptographic function such as Data Encryption Standard (DES), Advanced Encryption Standard (AES), IDEA, Triple DES (3DES) and the like. Some of these cryptographic functions are identified merely for illustrative purposes.

The encryption operation on mating key generator 621 produces a key 663 identical to mating key 622, which is loaded into a second process block 664. Process block 664 is used to decrypt encrypted descrambling key 651 to produce a descrambling key 665. Descrambling key 665 is used for descrambling scrambled content 666 loaded into set-top box 640 and in particular descrambler 660. Descrambling may include performance of 3DES operations on scrambled content 666. The result is content in a clear format, which may be transmitted from descrambler 660 and subsequently loaded into a MPEG decoder as shown in Figure 5 or optionally into a D/A converter, DVI Interface or IEEE 1394 interface.

It is contemplated that process blocks 661 and 664 may be altered to support decryption and encryption respectively, depending on how mating key 622 is formulated.

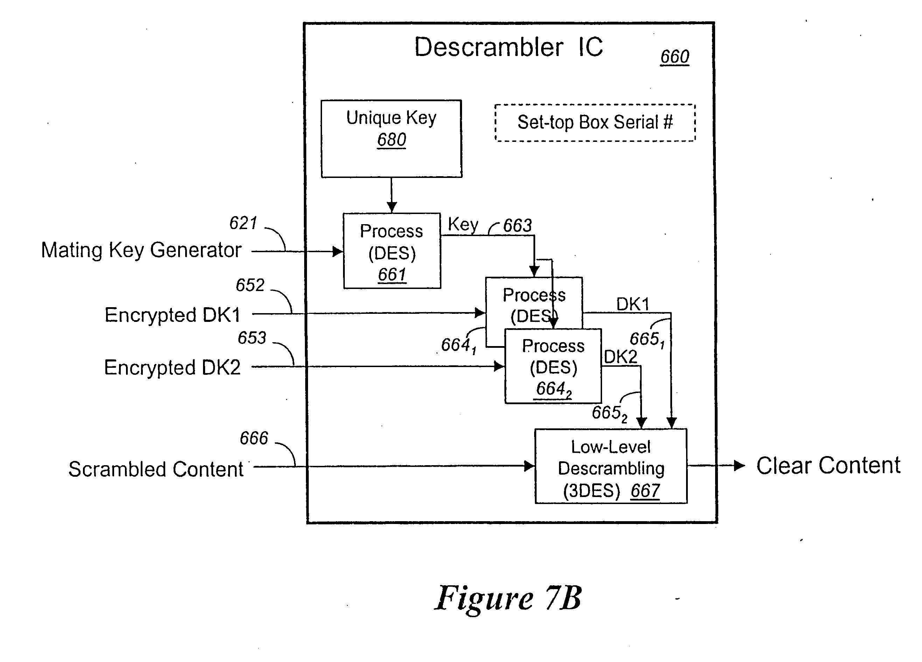

Figure 7B is an example of descrambler 660 implemented within set-top box 640 of Figure 6A. The descrambling is in accordance with 3DES with 2 keys. As set forth in Figure 7A, descrambler 660 comprises a first process block 661 that performs an encryption operation on mating key generator 621 using Unique Key 680.

The encryption operation on mating key generator 621 produces key 663, which is identical to mating key 622. The key 663 is loaded into two DES process blocks 664₁ and 664₂. Process block 664₁ is used to decrypt a first encrypted descrambling key 652 to produce a first descrambling key (DK1) 665₁. Process block 664₂ is used to decrypt a second encrypted descrambling key 653 to produce a second descrambling key (DK2) 665₂. DK1 665₁ and DK2 665₂ are used by a low-level 3DES descrambling logic 667 for descrambling scrambled content 666.

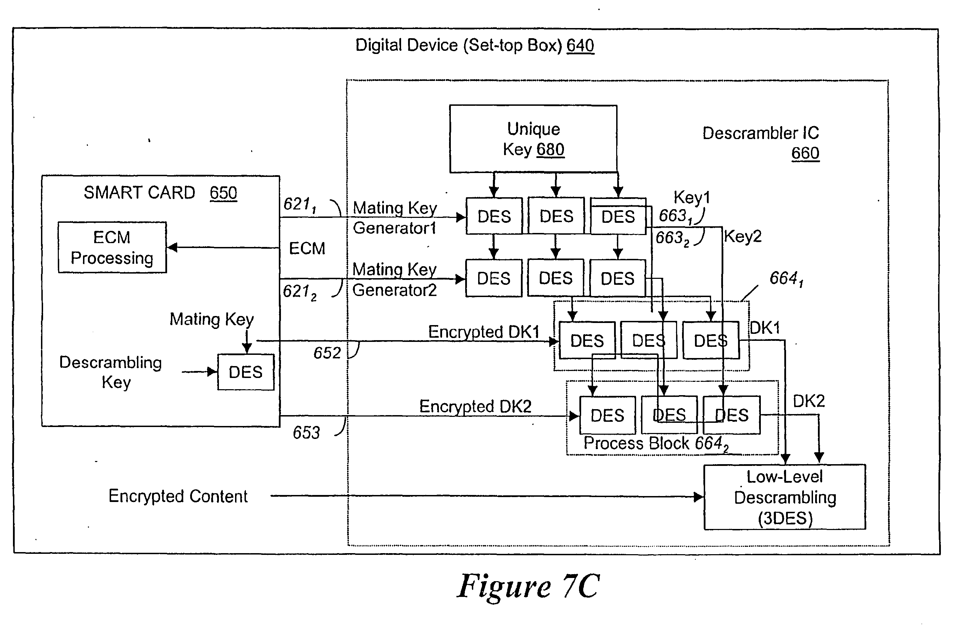

Of course, it is further contemplated that process block 661 may be configured to support 3DES with multiple keys as shown in Figure 7C. For this example, multiple mating key generators 621₁ and 621₂ are provided by smart card 650 to produce two keys 663₁ and 663₂ that are provided to process blocks 664₁ and 664₂, respectively. These process blocks 664₁ and 664₂ produce descrambling keys 665₁ and 665₂ that are used by a low-level 3DES descrambling logic 667 for descrambling scrambled content 666.

As illustrated in Figure 7C, a first mating key generators 621₁ may be configured as mating key generator 621 of Figure 6B. However, a second mating key generators 621₂ may be configured to authenticate copy protection parameters placed into key 663₂. For instance, second mating key generators 621₂ may comprise a copy control information (CCI) field that provides copy controls and a content identifier field that identifies incoming content to which the copy controls are applied. For instance, the CCI field may identify that the content cannot be copied for persistent storage or may be copied a certain number of times (once, twice, etc.). The CCI field may be used to identify the number of times that the content can be played back or sets prescribed viewing times for such content.

The second mating key generators 621₂ may further comprise a Content ID field including a value that identifies the digital content associated therewith and may include data to manage validity/expiration of the digital content. The second mating key generators 621₂ may further comprise a Copy Generation Number field including a value that identifies the number of times the digital content can be copied. Of course, to reduce the size of the fields, multiple parameters may be hashed and stored in the fields.

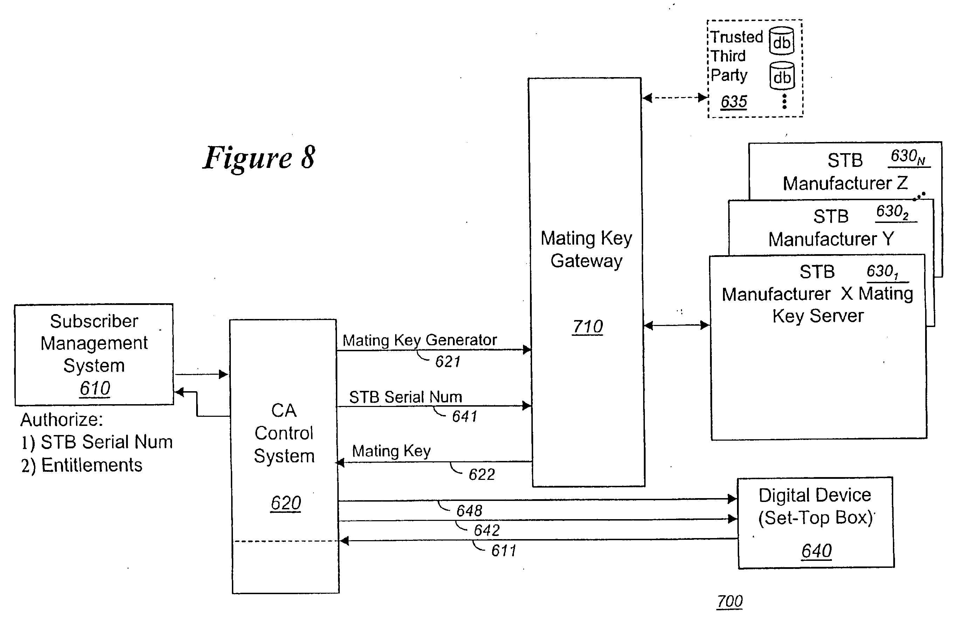

Referring now to Figure 8, an example of a secure content delivery system 700 is shown. Secure content delivery system 700 comprises subscriber management system 610, CA control system 620, a mating key gateway 710, mating key servers 630₁-630_{N} and set-top box 640. In lieu of transmitting mating key generator 621 and STB Serial Num 641 from CA control system 620 to mating key servers 630₁-630_{N} as shown in Figure 6A, such information may be routed to mating key gateway 710. Mating key gateway 710 accesses the STB Manufacturer ID 623 of Figure 6B from mating key generator 621 and appropriately routes mating key generator 621 and STB Serial Num 641 to a selected mating key server 630ᵢ. This reduces the amount of processing time by CA control system 620 or servers 630₁-630_{N} to recover mating key 622.

Alternatively, instead of mating key gateway 710 routing mating key generator 621 and STB Serial Num 641 to the selected mating key server 630ᵢ, it is contemplated that such information may be routed to trusted third party 635, which accesses a targeted database for retrieval of a mating key. The database selected for retrieval of mating key 622 is based on values associated with mating key generator 621 and/or STB Serial Num 641. For instance, each database may be accessible over a range of addresses based on values associated within mating key generator 621 and/or STB Serial Num 641. These values are used to identify the targeted database.

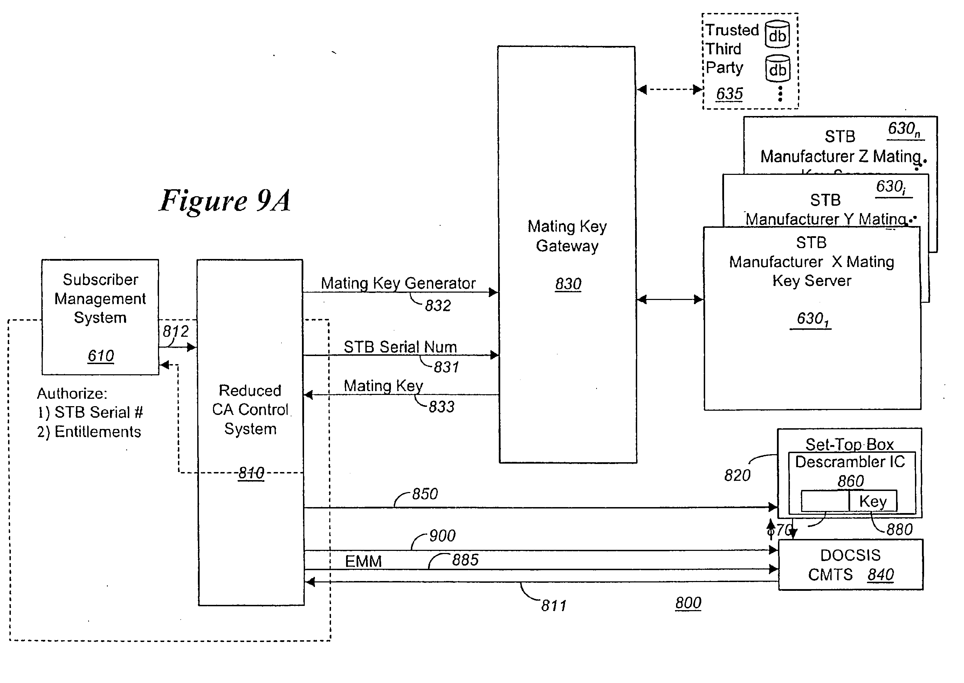

Figure 9A is an example of a secure content delivery system 800. Secure content delivery system 800 comprises subscriber management system 610 and a CA control system 810, a plurality of mating key servers 630₁-630_{N} associated with different set-top box manufacturers, a set-top box 820, a mating key gateway 830 (similar to gateway 710 of Figure 8), and a network interface 840 (e.g., DOCSIS CMTS). Set-top box 820 comprises a descrambler 860 including local memory 870 configured to store a unique key 880 (referred to as "Unique Key") of set-top box 820. The Unique Key 880 is loaded during IC manufacturer or creation of set-top box 820.

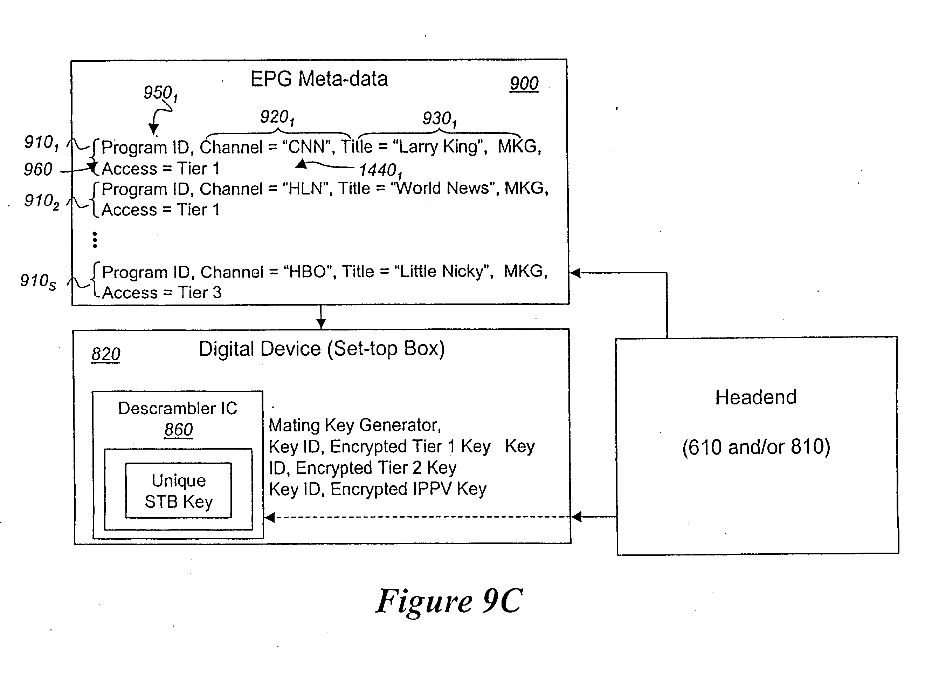

Set-top box 820 receives electronic program guide (EPG) meta-data with the EPG in an unscrambled format and receives digital programming content 850 in a scrambled format. In one example, EPG meta-data 900 is provided out-of-band by CA control system 810. As shown in Figure 9C, one example of EPG meta-data 900 includes multiple tag entries 910₁-910ₛ (S≥1) for different types of content provided by a content provider. Each tag entry 910ⱼ (1≤j≤S) comprises at least a channel name 920ⱼ, a name of the content 930ⱼ, and a key identifier 940ⱼ indicating the tier of service associated with the channel. In addition, each tag entry 910ⱼ further comprises a program identifier (PID) 950ⱼ and a mating key generator (MKG) 960ⱼ. Meta-data 900 is used to provide a mating key generator (e.g., mating key generator 621) and key identifier(s) for verification of the keys provided in the EMM 885.

Referring back to Figure 9A, once a user of set-top box 820 desires to receive particular type of content (e.g., PPV movie, broadcast channel, etc.), set-top box 820 determines whether entitlements associated with the requested content are already stored therein. If the entitlements are not stored, the user may be notified directly through a screen display or audio playback and prompted to provide a request 811 to subscriber management system 610 (or CA control system 810). Alternatively, the request 811 may be sent automatically without user control. Request 811 may be provided out-of-band (e.g., telephone call or e-mail over Internet via DOCSIS) as shown, or in-band to subscriber management system 610.

As shown for this example, upon receiving an authentication message 815 from subscriber management system 610, including STB Serial Num 831 and entitlements (or looking up STB Serial Num 831 at CA control system 810), CA control system 810 routes STB Serial Num 831 and mating key generator 832 to mating key gateway 830. Mating key gateway 830 operates as an intermediary to coordinate delivery of mating key 833 that is used to extract the requested content from downloaded, scrambled information. Of course, CA control system 810 may perform an authentication scheme with mating key gateway 830 in order to establish secure communications there between.

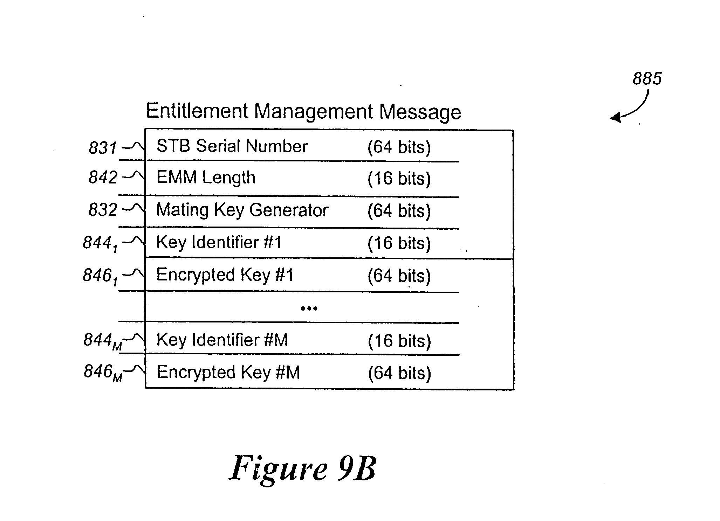

Upon receipt of mating key 833, CA control system 810 generates one or more entitlement management message (EMM) 885. No ECMs are provided; only channel keys over EMM 885 for example. One example of EMM 885 is illustrated in Figure 9B.

As shown in Figure 9B, EMM 885 comprises at least two of the following: STB Serial Num 831, EMM length field 842, mating key generator 832, "M" (M>1) key identifiers 844₁-844_{M} and encrypted service keys 846₁-846_{M} associated with key identifiers 844₁-844_{M}, respectively. Of course, other types of entitlements besides identifiers or service keys may be included in EMM 885 and the size (in bits) of these values can be varied. Also, it is contemplated that mating key generator 832 may be excluded from EMM 885 and sent separately and generally concurrent with EMM 885.

STB Serial Num 831 is a value that is used to indicate a particular set-top box and perhaps the manufacturer of the set-top box. "EMM length field" 842 is a bit value that is used to indicate the length of EMM 885. Mating key generator 832, as shown, is a bit value that includes the parameters forth above in Figure 6B. Each "key identifier" 844₁-844_{M} is a 16-bit value that indicates a tier of service associated with a corresponding encrypted service key 846₁-846_{M}, respectively. The encrypted service keys 846₁-846_{M} are decrypted by a key produced within descrambler 860 that corresponds to mating key 833 of Figure 9A.

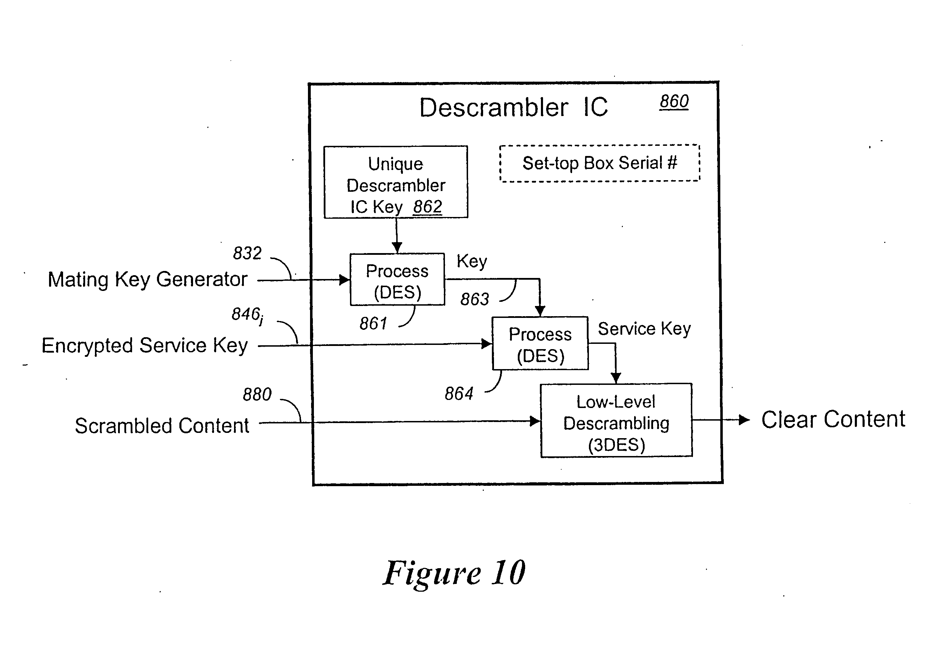

Figure 10 is a first example of descrambler 860 implemented within set-top box 820 of Figure 9A. On receipt of mating key generator 832 and encrypted service keys 846ⱼ (1≤j≤M) included in EMM 885, descrambler 860 comprises a first process block 861 that performs an encryption operation on mating key generator 832 using Unique Key 880 previously stored in descrambler 860. The encryption operation may be in accordance with symmetric key cryptographic functions such as DES, AES, IDEA, 3DES and the like. Of course, it is contemplated that process block 861 may be altered to perform a hashing function in lieu of an encryption function.

The encryption operation on mating key generator 832 produces a key 863 that is identical to mating key 833. Key 863 is loaded into a second process block 864 that is used to decrypt the encrypted service key 846ⱼ to recover the service key used to descramble scrambled content 850 loaded into set-top box 840 and in particular the descrambler 860. Descrambling may include performance of 3DES operations on the scrambled content. The result may be content in a clear format, which is transmitted from descrambler 860 and subsequently loaded into a MPEG decoder as shown in Figure 5 or optionally into a D/A converter, DVI Interface or IEEE 1394 interface.

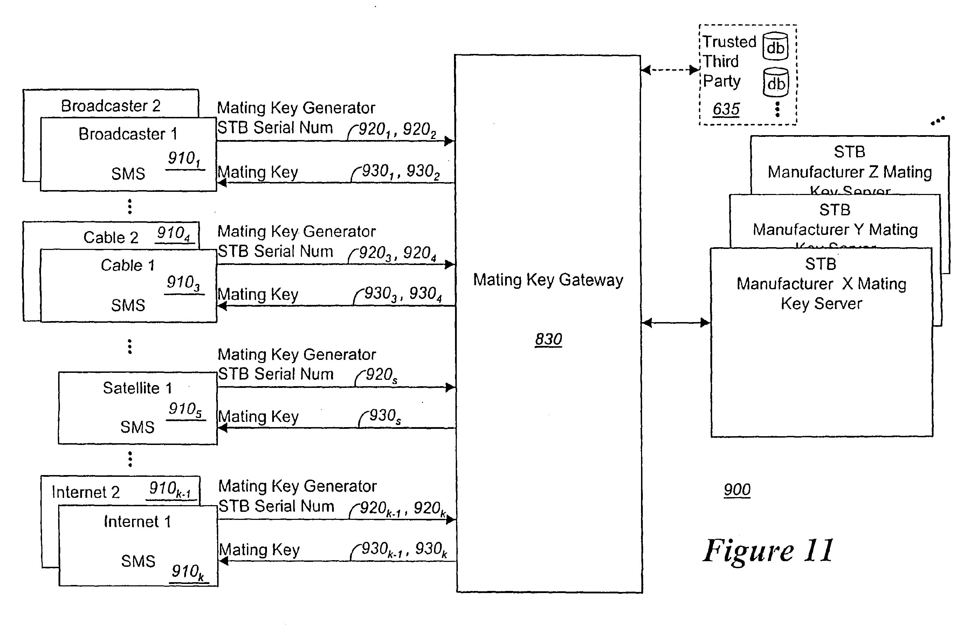

Referring now to Figure 11, a portion of an example of a secure content delivery system 900 is shown. In lieu of subscriber management system 610 and CA control system 810 of Figure 9A, mating key gateway 830 may be adapted for communications with a plurality of subscriber management systems (SMS) 910₁-910ₖ (K≥1) each associated with a different content provider. Each of these subscriber management systems 910₁-910ₖ supply mating key generators and STB Serial Nums 920₁-920ₖ to mating key gateway 830 and, in return, receive corresponding mating keys 930₁-930ₖ. These mating keys 930₁-930ₖ are used to encrypt service keys provided to one or more targeted set-top boxes (not shown). Alternatively, trusted third party 635 may be utilized as shown in Figures 6A, 8 and 9A.

For example, for this illustrated example, subscriber management systems 910₁ and 910₂ are terrestrial broadcasters, each providing mating key generators and STB Serial Nums 920₁, 920₂ to mating key gateway 830 and receiving corresponding mating keys 930₁, 930₂. Similar in operation, subscriber management systems 910₃ and 910₄ are cable operators, subscriber management system 910₅ is a direct broadcast satellite (DBS) company, and subscriber management systems 910ₖ₋₁ and 910ₖ are Internet content sources.

Referring to Figure 12, a portion of an example of a secure content delivery system 1000 is shown. A set-top box 1010 of the system 1000 receives scrambled or encrypted content 1020 from a first source and an entitlement management message (EMM) 1040 from a second source. The second source may be a smart card or a CA control system.

In accordance with one example of the invention, EMM 1040 comprises a copy protection key generator (CPKG) 1042 and an encrypted user key 1041. As shown in Figures 12 and 13, encrypted user key (E_{key}) 1041 is a value that is calculated to generate a copy protection key 1035 in descrambler 1030 when E_{key} 1041 is decrypted by a unique key ("Unique Key") 1031 or a derivative thereof. Unique Key 1031 is loaded during IC manufacturer or creation of set-top box 1010. Copy protection key 1035 is shared with other devices, such as another set-top box 1070, a potable computer (e.g., PDA) 1071, or even a portable jukebox 1072, for decryption purposes.

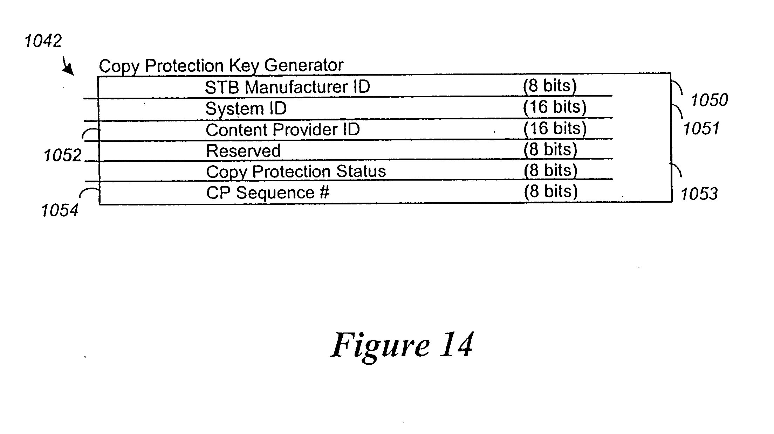

As shown in Figure 14, CPKG 1042 comprises STB manufacturer ID 1050, System ID 1051 to identify a system that provides EMM 1040 (e.g., similar to CA Provider ID 625 of Figure 6B) Content Provider ID 1052 to identify the provider of the digital content (e.g., similar to Service Provider ID 624 of Figure 6B), and CP Sequence Number 1053 being generally equivalent in purpose to Mating Key Sequence Number 626 of. Figure 6B. In addition, CPKG 1042 includes a Copy Protection Status value 1054 that provides content management controls such as whether or not the incoming content can be copied, number of times for playback, or date/time of playback.

Referring back to Figure 13, an example of the descrambler 1030 receives E_{key} 1041, CPKG 1042 and an encrypted descrambling key 1043 from the second source. CPKG 1042 is substantially equivalent to mating key generator 832 of Figure 9A. Descrambler 1030 comprises a first process block 1032 that decrypts E_{key} 1041 with Unique Key 1031 in accordance with symmetric key cryptographic functions such as DES, AES, IDEA, 3DES and the like.

The decryption operation on E_{key} 1041 recovers the user key 1033, which is loaded into a second process block 1634 that is used to encrypt CPKG 1042 to produce copy protection key 1035. Encrypted descrambling key 1043 is decrypted using Unique Key 1031 (or derivative thereof) to recover the descrambling key is a clear format for descrambling and/or decrypting the encrypted content 1020 loaded into set-top box 1010 and in particular descrambler 1030. Descrambling and/or decrypting may include performance of 3DES operations.

As a result, the content is temporarily placed in a clear format, but is routed to low-level encryption logic 1060, which encrypts the descrambled content with copy protection key 1035 associated with any or all of the destination digital devices. As a result, the content is secure during subsequent transmissions.

Referring now to Figure 15, another exemplary embodiment of a descrambler 1110 implemented within a digital device 1100 is shown. Adapted for communication with digital device 1100, descrambler 1110 receives program data from a content provider and routes the program data to a targeted digital device. The program data may be "copy protected" by encrypting or scrambling the program data to avoid the program data being accessible in the clear.

For one embodiment of the invention, descrambler 1110 comprises a memory 1120, Control Word (CW) key ladder logic 1130, Copy Protection (CP) key ladder logic 1140, and a plurality of cryptographic units 1150, 1160 and 1170. Herein, descrambler 1110 is deployed as a single integrated circuit. It is contemplated, however, that descrambler 1110 may be alternatively deployed as multiple integrated circuits contained within a multi-chip package.

As shown in Figure 15, memory 1120 is a programmable, non-volatile memory that can be written only once in order to enhance security. As a result, at least one unique key 1122 (hereinafter generally referred to as "STB key" and each referred to as STB key-t, where t ≥1) cannot be improperly read or overwritten after being loaded into one-time programmable memory 1120. STB key 1122 is provided to CW key ladder logic 1130 and CP key ladder logic 1140. Thus, STB key 1122, once programmed, cannot be reprogrammed, altered, or read from outside of descrambler 1110. In addition, J-tag cannot be used to read the value after programming. STB key 1122 can be deployed in a number of embodiments, such as, for example, a single 56-bit data sub-key, three 56-bit 3DES sub-keys, or a single 128-bit AES key.

As further shown in Figure 15, CW key ladder logic 1130 receives input information, namely a conditional access (CA) random value 1200, a mating key generator 1205, and one or more encrypted control words 1210. CW key ladder logic 1130 processes the input information and produces one or more derivative keys 1124 of STB key 1122 (hereinafter generally referred to as "Skey" and each referred to as Skey-u, where u ≥1). Skey 1124 is provided to a third cryptographic unit 1170 for decrypting incoming data 1215. Examples of incoming data 1215 include program data that is sent out-of-band, or hashed data produced by the digital device 1100 that can be used to confirm origination from the digital device 1100 when communicating back to a headend or CA control system for example.

CW key ladder logic 1130 also processes the input information to recover one or more control words 1126 (hereinafter generally referred to as "control words" and each referred to as "CW-v", where v ≥1) from encrypted control words 1210. Control words 1126 are provided to a first cryptographic unit 1150 for descrambling scrambled content 1220. Thereafter, clear content 1225 is provided to a second cryptographic unit 1160, which is configured to as a copy protection mechanism to encrypt clear content 1225 prior to transmission to a digital device such as a digital recorder, a set-top box or the like.

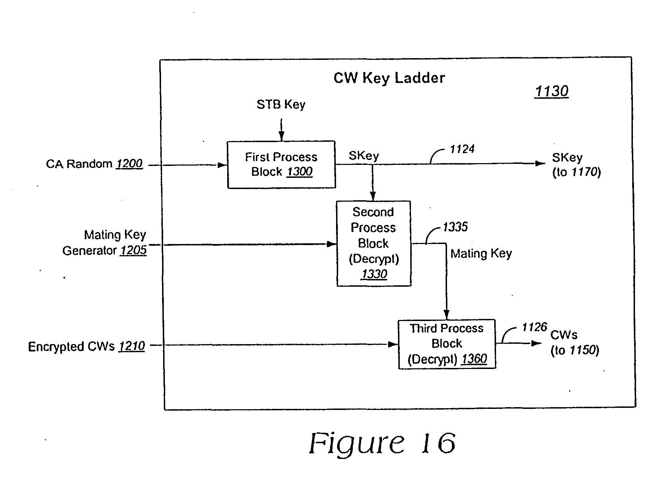

Referring to Figure 16, an exemplary embodiment of a Control Word (CW) key ladder logic 1130 of descrambler 1110 of Figure 15 is shown. In general, CW key ladder logic 1130 comprises a first process block 1300, a second process block 1330, and a third process block 1360. First process block 1300 is configured to generate Skey 1124, which is a derivation of STB key 1122. Second process block 1330 is configured to generate one or more mating keys 1335 (hereinafter generally referred to as "mating key" and each referred to as "mating key-w", where w ≥1) based on mating key generator 1205 or a logical derivative thereof. Third process block 1360 is configured to recover control words 1126 upon decrypting encrypted control words 1210 using mating key 1335 or logical derivative(s) thereof.

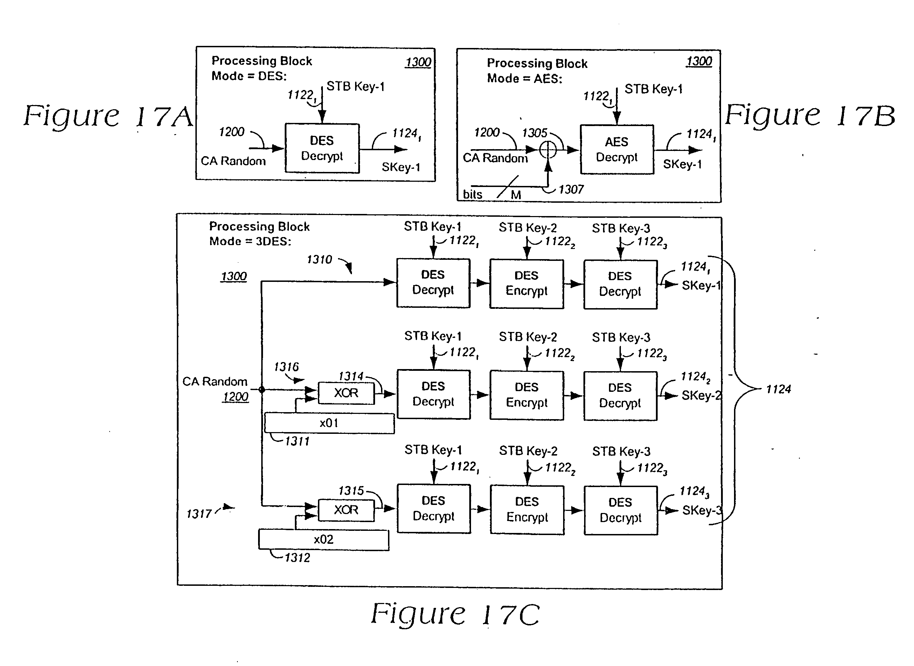

Referring now to Figures 17A through 17C, exemplary embodiments of operations of first process block 1300 of CW key ladder logic 1130 of Figure 16 are shown. With respect to Figure 17A, first process block 1300 performs DES cryptographic operations on CA random 1200, which is a seed value delivered to descrambler 1110 in a message from a content provider. Based on CA random 1200 and STB key-1 1122₁, Skey-1 1124₁ is generated. Skey-1 1124₁ is a derivative key of STB key-1 1122₁.

With respect to Figure 17B, first process block 1300 may be adapted to perform AES cryptographic operations in lieu of DES cryptographic operations. In particular, first process block 1300 is configured to generate Skey-1 1124₁, a derivative key of STB key-1 1122₁, based on an input bit value 1305 and STB key-1 1122₁. For one embodiment of the invention, input value 1305 comprises CA random 1200 in combination with "M" additional bits 1307 set to a predetermined logic value (e.g., all logic "0"). For one embodiment, bits 1307 are positioned as the most significant bits of input value 1305. Input value 1305 is decrypted using STB key-1 1122₁ to produce Skey-1 1124₁. Herein, where "M" is 64 and CA random 1200 is 64-bits in length, Skey-1 1124₁ is 128-bits in length. It is contemplated, however, that other bit sizes may be utilized.

With respect to Figure 17C, first process block 1300 may be adapted to perform 3DES cryptographic operations in lieu of DES or AES cryptographic operations. When 3DES cryptographic operations are performed, first process block 1300 may be configured to perform logical operations between predetermined values and CA random 1200. The "logical" operations may involve at least one Exclusive OR operation or, if input 1200 is broken out into three separate input paths for data inputs 1310, 1314 and 1315 may involve a bitwise logical check of multiple data values to ensure that the data values are different. The problem is that if data inputs 1310, 1314 and 1315 are the same, then data outputs 1124₁, 1124₂, 1124₃ will be the same. This can relegate 3DES to a single DES operation as two of the keys will cancel each other. This can weaken the security of the overall implementation.

As shown in this embodiment, CA random 1200 is routed via a first computation path 1310. However, CA random 1200 is XOR'ed (e.g., one type of a bitwise logical operation) with a first predetermined value 1311 and a second predetermined value 1312, where results 1314 and 1315 are routed along second and third computation paths 1316 and 1317, respectively. Such XOR operations may be processed in parallel with each other. For this embodiment of the invention, predetermined values 1311 and 1312 differ from each other (e.g., x01H, x02H).

CA random 1200 along with results 1314 and 1315 undergo DES decryption operations using a first unique key "STB key-1" 1122₁. The decrypted results are subsequently encrypted using a second unique key "STB key-2" 1122₂, and then, are decrypted using a third unique key "STB key-3" 1122₃. As a result, first process block 1300 produces Skey 1124; namely, for this embodiment, a first derivative key "Skey-1" 1124₁, second derivative key "Skey-2" 1124₂, and third derivative key "Skey-3" 1124₃.

Regardless of the type of cryptographic function used, Skey 1124 is provided to second process block 1330 in order to produce mating key(s) 1335.

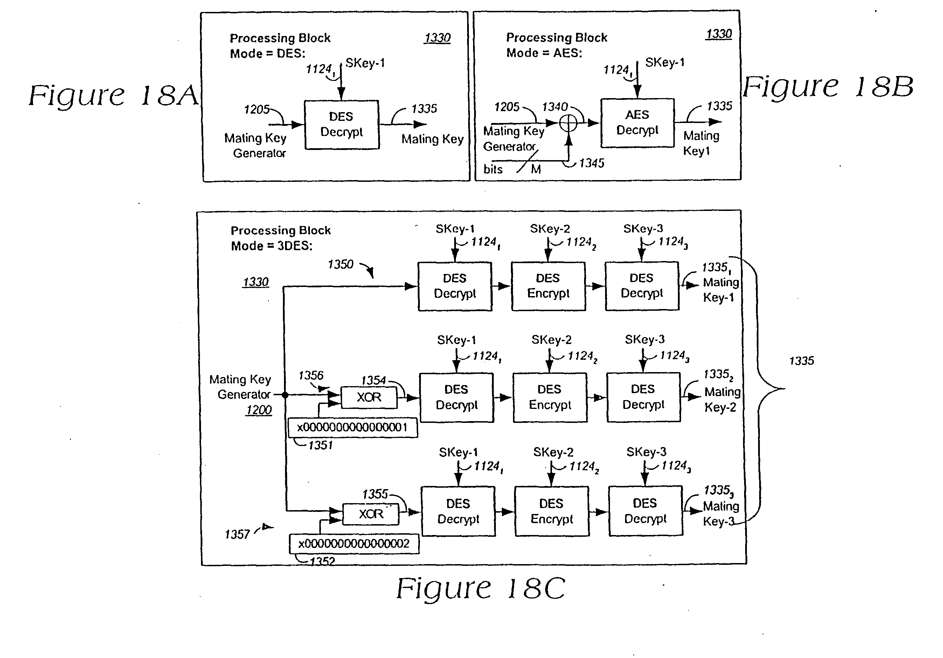

Referring to Figures 18A-18C, exemplary embodiments of second process block 1330 of CW key ladder logic 1130 of Figure 16 is shown. With respect to Figure 18A, second process block 1330 performs DES cryptographic operations on mating key generator 1205 utilizing Skey-1 1124₁, which is a single derivative key of STB key-1 1122₁ for this embodiment. This produces mating key-1 1335₁ that is provided to third process block 1360.

With respect to Figure 18B, when AES cryptographic operations are performed, second process block 1330 is configured to generate mating key-1 1335₁, based on mating key generator 1205 and Skey-1 1124₁. For one embodiment of the invention, an input value 1340 comprises mating key generator 1205 in combination with M-bits 1345 having a predetermined logic value (e.g., all bits set to logic "0"). M-bits 1345 are positioned as the most significant bits of input value 1340, wherein M ≤ 64 for this embodiment. Input value 1340 is decrypted using Skey-1 1124₁ to produce mating key-1 1335₁.

With respect to Figure 18C, when 3DES cryptographic operations are performed, second process block 1330 is configured to perform logical operations between predetermined values and mating key generator 1205. More specifically, mating key generator 1205 is routed via first computation path 1350. Also, mating key generator 1205 is XOR'ed with a first predetermined value 1351 and a second predetermined value 1352. These results 1354 and 1355 are routed via second and third computation paths 1356 and 1357, respectively. Such XOR operations may be processed in parallel with each other.

Unlike Figure 17C, mating key generator 1205 and results 1354 and 1355 undergo DES decryption operations using a derivative keys 1124₁-1124₃, namely Skey-1 1124₁, Skey-2 1124₂, and Skey-3 1124₃. This produces mating keys 1335, namely a mating key-1 1335₁, a mating key-2 1335₂, and a mating key-3 1335₃.

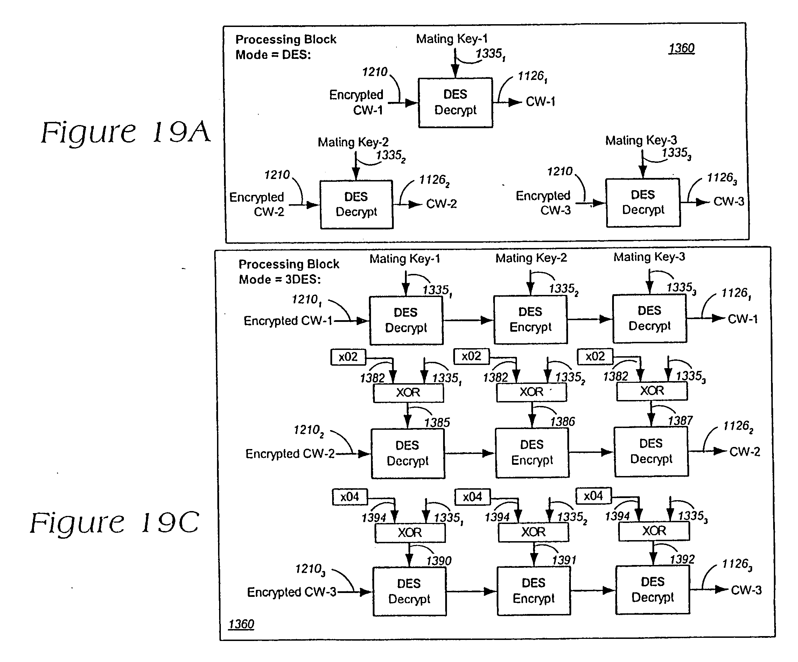

Referring to Figures 19A-19C, exemplary embodiments of third process block 1360 of CW key ladder logic 1130 of Figure 16 is shown. With respect to DES cryptographic function as shown in Figure 19A, mating key-1 1335₁ is used to recover control words 1126. As an illustrative embodiment, control words 1126 feature a plurality of control words, namely a first control word (CW-1) 1126₁, a second control word (CW-2) 1126₂, and a third control word (CW-3) 1126₃.

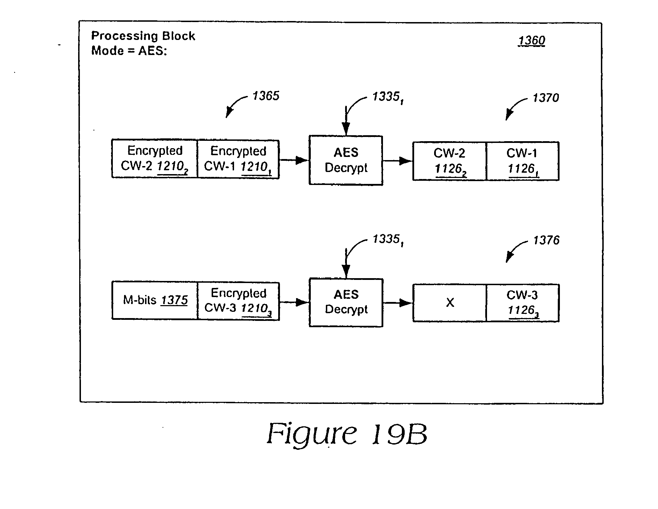

With respect to Figure 19B, when AES cryptographic operations are performed, third process block 1360 is configured to recover control words in a collective manner. For instance, according to one embodiment of the invention, input value 1365 comprises first encrypted control word 1210₁ situated as the least significant portion. A second encrypted word 1210₂ is positioned as the most significant portion of input value 1365. Input value 1365 is decrypted in accordance with the AES cryptographic function using mating key-1 1335₁ produced by second process block 1330 of Figure 16, which produces a result 1370 having a bit width equivalent to a bit width of input value 1365. For result 1370, CW-1 1126₁ is positioned as the least significant portion while CW-2 1126₂ is positioned at the most significant portion.

In addition, third process block 1360 is also configured to decrypt a third encrypted control word 1210₃, perhaps in combination with a plurality of bits 1375 positioned as the most significant bits. Such decryption is performed using mating key-1 1335₁, and a result 1376 is produced. Such decryption is in accordance with an AES cryptographic function. CW-3 1126₃ may be extracted from result 1376. In one embodiment, the extraction is accomplished by accessing a predetermined number of least significant bits from result 1376.

As shown in Figure 19C, a plurality of encrypted control words are routed through a 3-DES cryptographic function as shown herein. This recovers CW-1 1126₁ through CW-3 1126₃. As an example, first encrypted control word 1210₁ is decrypted in accordance with DES function using mating key-1 1335₁. Then, decrypted control word is encrypted using mating key-2 1335₂, and subsequently decrypted using the DES function according to a third mating key 1335₃ to recover CW-1 1126₁.

Second encrypted control word 1210₂, however, is decrypted using key information 1385 produced by first mating key 1335₁ being XOR'ed with a first predetermined value 1382 (e.g., x02H). This XOR operation prevents cancellation of the keys where recovered CW-1 1126₁ is equivalent to recovered CW-2 1126₂. This first predetermined value 1382 is XOR'ed with other alternating keys 1335₂-1335₃ to produce key information 1386 and 1387 loaded into DES encryption logic for processing. The same function applies to the recovery of CW-3 1126₃, but third encrypted control word 1210₃ is processed in accordance with cryptographic DES using key information 1390, 1391, 1392 based on mating keys 1335₁-1335₃ XOR'ed with a second predetermined value 1394 (e.g., x04H).

Referring now to Figure 20, an exemplary embodiment of CP key ladder logic 1140 of descrambler 1110 of Figure 15 is shown. Herein, CP key ladder logic 1140 includes a fourth process block 1400, a fifth process block 1430 and a sixth process block 1460. Fourth process block 1400 is configured to generate one or more derivative keys 1410 (hereinafter generally referred to as "SCPkey" and each referred to as "SCPkey-x", where x ≥1) based on CP random 1250 and STB key 1122 or a logical derivation thereof. Fifth process block 1430 is configured to generate one or more user keys 1435 (hereinafter generally referred to as "user key" and each referred to as "user key-y", where y ≥1) based on encrypted user keys 1255 or a logical derivation thereof. Sixth process block 1460 is configured to generate one or more CP keys 1465 (hereinafter generally referred to as "CP key" and each referred to as "CP key-z", where z ≥1) by decrypting one or more copy protection (CP) key generators 1260 using user key 1435 (or derivatives thereof) generated by fifth process block 1430.

With respect to Figure 21A, fourth process block 1400 performs DES cryptographic operations on CP random 1250, which is a seed value delivered to descrambler 1110 in a message from a content provider. SCPkey-1 1410₁ is produced based on CP random 1250 and a logical derivation 1405 of STB key 1122 (e.g., STB key-1 1122₁). Logical derivation 1405 is a result produced by STB key-1 1122₁ being XOR'ed with a predetermined value 1407. Hence, SCPkey-1 1410₁ is a derivative key of STB key-1 1122₁.

With respect to Figure 21B, when AES cryptographic operations are performed, fourth process block 1400 is configured to generate SCPkey 1410, a derivative key of STB key 1122, based on an input bit value 1415 and logical derivation 1405. For one embodiment of the invention, input bit value 1415 comprises CP random 1250 in combination with a plurality of bits (M) 1417. Bits 1417 are positioned as the most significant bits of input bit value 1415. Herein, these "M" may be 64 bits which are all set to logic "0", although another bit size and a different logic value may be utilized. Input bit value 1415 is decrypted using logical derivation 1405 to produce SCPkey-1 1410₁.

With respect to Figure 21C, when 3DES cryptographic operations are performed, fourth process block 1400 is configured to perform cryptographic operations on CP random 1250. More specifically, CP random value 1250 is decrypted based on a first logical derivation 1420, which is a value produced by predetermined value (e.g., x0AH) 1407 being XOR'ed with STB key-1 1122₁. Such XOR operations may be processed in parallel with each other.

The decrypted results 1421, 1422 and 1423 undergo DES encryption operations using a second logical deviation 1424, which is a result STB key-2 1122₂ XOR'ed with predetermined value 1407. This produces encrypted results 1425, 1426 and 1427, which are decrypted using a third logical deviation 1428. Third logical deviation is a result of STB key-3 1122₃ XOR'ed with predetermined value 1407. The resultant outputs are first derivative key "SCPkey-1" 1410₁, second derivative key "SCPkey-2" 1410₂, and third derivative key "SCPkey-3" 1410₃.

Referring to Figures 22A-22C, exemplary embodiments of fifth process block 1430 of CP key ladder logic 1140 of Figure 20 is, shown. With respect to Figure 22A, for this embodiment of the invention, fifth process block 1430 performs DES cryptographic operations on encrypted user keys 1255 utilizing SCPkey 1410 (e.g., SCPkey-1 1410₁) from fourth process block 1400. This produces user key 1435 (e.g., user key-1 1435₁) that is provided to sixth process block 1460.

It is contemplated that an XOR operation may be performed on encrypted user keys 1255 prior to receipt by fifth process block 1430. Alternatively, a logical check may be performed in lieu of XOR operations to ensure that all SCPkeys 14101-1410ₓ are unique.

With respect to Figure 22B, when AES cryptographic operations are performed, fifth process block 1430 is configured to generate user key 1435 (e.g., user key-1 1435₁, based on encrypted user key 1255 and a predetermined value 1440. For one embodiment of the invention, an input value 1445 comprises encrypted user keys 1255 in combination with a plurality of bits 1440 set to predetermined logic values and positioned as the most significant bits of input value 1445. Herein, 64 bits may be used, although another bit size may be utilized. Input value 1445 is decrypted using SCPkey (e.g., SCPkey-1 1410₁) to produce user key 1435₁.

With respect to Figure 21C, when 3DES cryptographic operations are performed, fifth process block 1430 is configured to perform logical operations between predetermined values and encrypted user keys 1255. More specifically, encrypted user key 1255 is routed over a first computation path 1450. In addition, a first predetermined value 1451 (e.g., x01H) is XOR'ed with encrypted user key 1255 to produce a logical derivation 1452, which is routed over a second computation path 1453. Also, encrypted user key 1255 is XOR'ed with a second predetermined value 1454 to produce a logical derivation 1455 which is routed over a third computation path 1456. Such XOR operations may be processed in parallel with each other. For this embodiment of the invention, predetermined values 1451 and 1454 are different (x01H, x02H).

The results undergo DES decryption operations using SCPkey 1410, namely SCPkey-1 1410₁, SCPkey-2 1410₂, and SCPkey-3 1410₃. The final results, after undergoing encryption-decryption-encryption operations, produce user key-1 1435₁, user key-2 1435₂, and user key-3 1435₃.

Referring to Figures 23A-23C, exemplary embodiments of sixth process block 1460 of CP key ladder logic 1140 is shown. With respect to DES cryptographic function as shown in Figure 23A, one or more CP key generators 1260 ((hereinafter generally referred to as "CP key generator" and each referred to as "CP key generator-r, where r ≥1) may be used to recover corresponding CP key 1465. For example, CP key generator-1 1260₁ is decrypted by a cryptographic function using user key-1 1435₁ to produce CP key-1 1465₁. Likewise, second and third CP key generators 1260₂ and 1260₃ are decrypted by a cryptographic function using user key-2 1435₂ and user key-3 1435₃. This produces a CP key-2 1465₂ and CP key-3 1465₃, respectively.

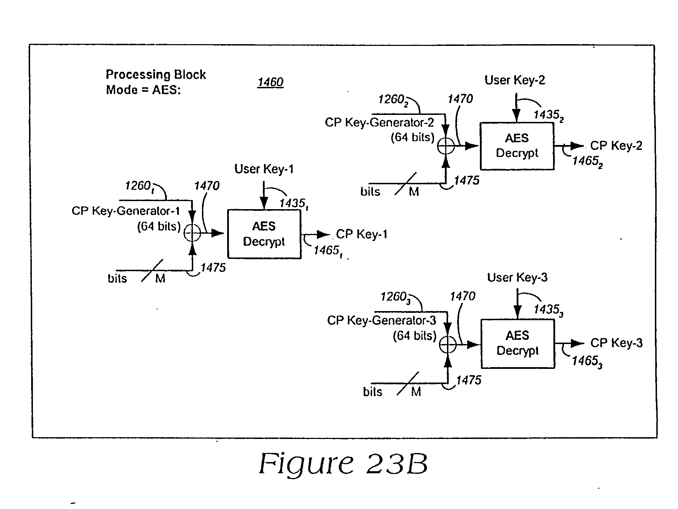

With respect to Figure 23B, when AES cryptographic operations are performed, sixth process block 1460 is configured to recover copy protection keys for use in re-encrypting content before transmission to another digital device. For instance, according to one embodiment of the invention, a first input value 1470 comprises a concatenation of CP key generator-1 1260₁ and a predetermined value 1475. As shown, for illustrative purposes, CP key generator-1 1260₁ is situated in the least significant portion of first input value 1470 and predetermined value 1475 is situated in the most significant portion. First input value 1470 is decrypted in accordance with the AES cryptographic function using a user key (e.g., user key 1435₁ produced by fifth process block 1430). This produces CP key-1 1465₁. Similar operations are performed on CP key generator-2 1260₂ and CP key generator-3 1260₃ to produce CP key-2 1465₂ and CP key-3 1465₃, respectively.

As shown in Figure 23C, when 3DES cryptographic operations are performed, sixth process block 1460 is configured to recover copy protection keys for use in re-encrypting content before transmission to another digital device. According to one embodiment of the invention, CP key generator-1 1260₁ is decrypted using user key-1 1435₁. The result is encrypted using user key-2 1435₂, and then, the encrypted result is decrypted using user key-3 1435₃. This produces CP key-1 1465₁.

Similarly, second CP key generator 1260₂ is decrypted using a first logical deviation 1480 of user key-1 1435₁. As one embodiment of the invention, first logical deviation 1480 is a result of user key-1 1435₁ XOR'ed with a predetermined value 1482. This produces a decrypted result 1484, which is subsequently encrypted using a second logical deviation 1485. Second logical deviation 1485 is a result of user key-2 1435₂ XOR'ed with predetermined value 1482. This produces an encrypted result 1486, which is subsequently decrypted using a third logical deviation 1487, namely a result of user key-3 1435₃ XOR'ed with predetermined value 1482. This produces CP key-2 1465₂.

In addition, CP key generator-3 1260₃ is decrypted using a fourth logical deviation 1480 of user key-1 1435₁. As one embodiment of the invention, fourth logical deviation 1490 is a result of user key-1 1435₁ XOR'ed with a predetermined value 1492. This produces a decrypted result 1494, which is subsequently encrypted using a fifth logical deviation 1495. Fifth logical deviation 1495 is a result of user key-2 1435₂ XOR'ed with predetermined value 1492. This produces an encrypted result 1496, which is subsequently decrypted using a sixth logical deviation 1497, namely a result of user key-3 1435₃ XOR'ed with predetermined value 1492. This produces CP key-3 1465₃.

Referring now to Figures 15 and 24, a detailed embodiment of authentication logic implemented within descrambler 1110. Herein, the authentication logic comprises a first component 1290 adapted to route CA Random 1200 to first cryptographic unit 1150. The authentication logic further comprises a second component 1292, adapted to route at least a portion of CP random 1250 to first cryptographic unit 1150, as well as a third component 1294 adapted to route at least a portion of CP key generator 1260 to first cryptographic unit 1150.

Authentication of CA random 1200 is normally used with 3DES low-level encryption in order to verify that the correct value for CA random 1200 is being used. Such authentication is accomplished by enabling a CA Random Authentication signal 1275, which allows first component 1290 to load a portion of CA Random 1200 into an Initialization Vector 1152 of the 3DES function, such as two least significant bytes for example. Initialization Vector 1152 is adjusted to prevent a hacker from continually using an illicitly uncovered mating key, even though the secure content delivery system has been updated.

Moreover, updating CA Random value 1200 to another value may be accomplished by temporarily disabling CA Random Authentication signal 1275 while an updated CA Random is transmitted to descrambler 1110. This prevents the current CA Random value, in the process of being updated, from being improperly loaded into first cryptographic unit 1150.

After a certain period of time of elapsed to allow the updated CA Random value has propagated through the secure content delivery system, CA Random Authentication signal 1275 is again enabled.

Referring still to Figures 15 and 24, authentication of CP Random 1250 is used with 3DES low-level encryption to verify that the correct CP Random value and derivative user key are being used. When enabled, CP Random Authentication signal 1280 allows second component 1292 to load at least a portion of CP Random 1250, such as the two least significant bytes of CP Random 1250 for example, into Initialization Vector 1152 of the 3DES function. Otherwise, it may be possible for a hacker writing rogue code to tag all content with the same user key in order to recover the CP keys and share content with other players which would not ordinarily get access to certain content.

Authentication of at least a portion of CP key generator 1260 is used to authenticate the copy protection status of content. When enabled, CP Key Generator Authentication signal 1285 allows third component 1294 to load a portion of CP key generator 1260 into Initialization Vector 1152 of the 3DES low-level encryption function. For one embodiment, the two least significant bytes of CP key generator 1260 are loaded. Of course, different groups of bytes forming CP key generator 1260 may be loaded for authentication purposes. Otherwise, it may be possible for a hacker writing rogue code to tag all content as "copy free".

According to one embodiment of the invention, a content provider is responsible for enabling and disabling of CA Random Authentication signal 1275, CP Random Authentication signal 1280 and CP Key Generator Authentication signal 1285.

Referring now to Figure 25, a detailed embodiment of the descrambler 1110 of Figure 24 is shown. As described above, descrambler 1110 comprises one-time programmable memory 1120; a plurality of process blocks 1300, 1330, 1360, 1400, 1430, 1460; a plurality of cryptographic units 1150, 1160, 1170; and authentication logic 1290, 1292, 1294.

In general, first process block 1300 produces Skey 1124 based on CA Random 1200 and STB key 1122. Second process block 1330 produces mating key 1335 based on mating key generator 1205 and Skey 1124. Third process block 1360 produces control words 1126 recovered from one or more encrypted control words 1210 using mating key 1335. Control words 1126 are stored in one or more storage components 1500 such as random access memory, flash memory, or registers for example.

By enabling an Update CW signal 1505, additional control words are allowed to be stored within storage component 1500. By disabling Clear CW signal 1510, however, some or all of control words 1126 stored in storage component 1500 are removed (i.e., their storage location can be overwritten).

Fourth process block 1400 produces one or more SCPkeys 1410 based on CP Random 1250 and STB keys 1122. Fifth process block 1430 produces user key 1435 based on one or more encrypted user keys 1255 and SCPkey 1410. Sixth process block 1460 produces CP key 1465 based on CP key generator 1260 and user key 1435. CP keys 1465 are stored in one or more key storage components 1520 such as registers, random access memory, flash memory, or the like. By enabling an Update CP Key signal 1525, additional CP keys 1465 can be stored within key storage component 1520. By enabling Clear CP Key signal 1530, however, some or all of CP keys 1465 stored in storage component 1520 are not preserved.

As further shown in Figure 25, CP decryption logic 1550 is part of second cryptographic unit 1160 of Figure 15. CP decryption logic 1550 decrypts encrypted (copy protected) content from a digital device using CP keys stored within key storage components 1520. CP encryption logic 1560 encrypts content in the clear using CP keys stored within key storage components 1520. Decoding circuitry 1570 performs decompression of the video and audio content. After decompression, there are two possibilities, 1) digital to analog conversion, e.g. for baseband video out and audio out, or 2) the decompressed digital content can be encoded for transmittal across the Digital Video Interface (DVI).

In the foregoing description, the invention is described with reference to specific exemplary embodiments thereof. It will, however, be evident that various modifications and changes may be made thereto without departing from the scope of the present invention as set forth in the appended claims. The specification and drawings are accordingly to be regarded in an illustrative rather than in a restrictive sense.

## Claims

1. A descrambler comprising:
a non-volatile memory (1120) to store a unique key (1122);
a control word key ladder (1130) logic to produce (i) a first value (1124) generated based on a conditional access (CA) random value (1200) and the unique key (1122), (ii) a second value (1335) generated using the first value, and (iii) a third value (1126) recovered by using the second value;
a first cryptographic unit (1150) to descramble incoming content (1220) in a scrambled format based on the third value; and
a second cryptographic unit (1170) to decrypt incoming encrypted data (1215) using the first value.

2. The descrambler of claim 1 being a single integrated circuit.

3. The descrambler of claim 1 implemented within a set-top box.

4. The descrambler of claim 1, wherein the first value is a derivative key generated by performing a decryption operation on the CA random value using the unique key.

5. The descrambler of claim 1, wherein the first value is a derivative key derived by performing a decryption operation on a combination of the CA random value and padding data, the combination being at least 128-bits in length.

6. The descrambler of claim 4, wherein the second value is a mating key recovered by performing a decryption operation on a mating key generator using the derivative key, the mating key generator being a message comprising one or more of the following: a manufacturer identifier, a service provider identifier, a conditional access (CA) provider identifier and a mating key sequence number.

7. The descrambler of claim 5, wherein the second value is a mating key recovered by performing a decryption operation on at least 128-bits of data comprising a mating key generator being a message comprising one or more of the following: a manufacturer identifier, a service provider identifier, a conditional access (CA) provider identifier and a mating key sequence number.

8. The descrambler of claim 6, wherein the third value is a control word recovered by performing a decryption operation on an encrypted control word using the mating key.

9. The descrambler of claim 7, wherein the third value is a control word recovered by performing (i) a first decryption operation using the mating key on a first combination of a first encrypted control word and a second encrypted control word, and (ii) a second decryption operation using the mating key on a second combination of a third encrypted control word and a plurality of bits operating as padding for the second combination to be at least 128-bits in length.

10. The descrambler of claim 1 further comprising a third cryptographic unit to encrypt the descrambled incoming content prior to transmission to a digital device.

11. The descrambler of claim 10 further comprising a copy protection ladder logic to produce a copy protection key used by the third cryptographic unit to encrypt the descrambled incoming content.

12. The descrambler of claim 11, wherein the copy protection ladder logic to produce a copy protection key by performing a decryption operation on a concatenation of a random value and a plurality of bits to produce a result being at least 128-bits in length, using a logical derivation being a result of an Exclusive OR (XOR) operation of the unique key and a predetermined value.

13. The descrambler of claim 1, wherein the second value is recovered from a mating key generator undergoing a cryptographic operation using the first value.

14. The descrambler of claim 13, wherein the third value is a control word recovered by decrypting an encrypted control word using the second value.

15. The descrambler of claim 1, wherein the second cryptographic unit to decrypt incoming encrypted program data received out-of-band by a digital device implemented with the descrambler.

16. The descrambler of claim 15, wherein the encrypted program data comprises an encrypted entitlement management message that comprises at least two of (i) a smart card identifier, (ii) a length field, (iii) a mating key generator, (iv) at least one key identifier and (v) at least one key associated with the at least one key identifiers.

17. The descrambler of claim 12, wherein the copy protection ladder logic to produce a copy protection key based on a plurality of process blocks, wherein
a first process block configured to generate a derivative key based on a second random value and either the unique key or a logical derivation of the unique key,
a second process block configured to recover a user key from an encrypted user key using the derivative key, and
a third process block configured to generate the copy protection key from a copy protection key generator using the user key.

18. The descrambler of claim 10, wherein the third cryptographic unit encrypts the descrambled incoming content using the copy protection key prior to transmission to a digital device.

19. The descrambler of claim 17, wherein the non-volatile memory is a one-time programmable, non-volatile memory coupled to the control word key ladder logic and the copy protection ladder logic.

20. The descrambler of claim 19 further comprising a memory to store the copy protection key, the memory being coupled to the third cryptographic unit.

21. The descrambler of claim 17, wherein the copy protection ladder logic further comprises
a fourth process block configured to generate a second derivative key based on a random value and the unique key;
a fifth process block configured to decrypt an encrypted user key using the second derivative key to recover a user key; and
a sixth process block configured to generate a copy protection key from a copy protection key generator using the user key.

22. A method of descrambling scrambled content, the method comprising:
producing a first value (1124) generated based on a conditional access (CA) random value (1200) and a unique key (1122) stored in non-volatile memory (1120);
producing a second value (1335) generated using the first value;
producing a third value (1126) recovered using the second value;
descrambling incoming content (1220) in a scrambled format based on the third value; and
decrypting incoming encrypted data (1215) using the first value.

## Patentansprüche

1. Entwürfler, der Folgendes umfasst:
einen nichtflüchtigen Speicher (1120), um einen eindeutigen Schlüssel (1122) zu speichern;
eine Steuerwortschlüssel-Leiterlogik (1130), um (i) einen ersten Wert (1124), der basierend auf einem Zufallswert (1200) für den bedingten Zugriff (CA-Zufallswert) und dem eindeutigen Schlüssel (1122) erzeugt wird, (ii) einen zweiten Wert (1335), der unter Verwendung des ersten Werts erzeugt wird, und (iii) einen dritten Wert (1126), der unter Verwendung des zweiten Werts zurückgewonnen wird, zu erzeugen;
eine erste kryptographische Einheit (1150), um den in einem Verwürfelten Format ankommenden Inhalt (1220) basierend auf dem dritten Wert zu entwürfeln; und
eine zweite kryptographische Einheit (1170), um die ankommenden verschlüsselten Daten (1215) unter Verwendung des ersten Wertes zu entschlüsseln.

2. Entwürfler nach Anspruch 1, der eine einzige integrierte Schaltung ist.

3. Entwürfler nach Anspruch 1, der in einer Set-Top-Box implementiert ist.

4. Entwürfler nach Anspruch 1, wobei der erste Wert ein abgeleiteter Schlüssel ist, der durch das Ausführen einer Entschlüsselungsoperation an dem CA-Zufallswert unter Verwendung des eindeutigen Schlüssels erzeugt wird.

5. Entwürfler nach Anspruch 1, wobei der erste Wert ein abgeleiteter Schlüssel ist, der durch das Ausführen einer Entschlüsselungsoperation an einer Kombination aus dem CA-Zufallswert und Fülldaten abgeleitet wird, wobei die Kombination wenigstens 128 Bit lang ist.

6. Entwürfler nach Anspruch 4, wobei der zweite Wert ein Gegenschlüssel ist, der durch das Ausführen einer Entschlüsselungsoperation an einem Gegenschlüsselgenerator unter Verwendung des abgeleiteten Schlüssels zurückgewonnen wird, wobei der Gegenschlüsselgenerator eine Nachricht ist, die einen oder mehrere der Folgenden umfasst: einen Hersteller-Identifizierer, einen Diensteanbieter-Identifizierer, einen Identifizierer eines Anbieters für bedingten Zugriff (CA-Anbieters) und eine laufende Nummer des Gegenschlüssels.

7. Entwürfler nach Anspruch 5, wobei der zweite Wert ein Gegenschlüssel ist, der durch das Ausführen einer Entschlüsselungsoperation an wenigstens 128 Bit der Daten zurückgewonnen wird, die einen Gegenschlüsselgenerator umfassen, der eine Nachricht ist, die einen oder mehrere der Folgenden umfasst:
einen Hersteller-Identifizierer, einen Diensteanbieter-Identifizierer, einen Identifizierer eines Anbieters für bedingten Zugriff (CA-Anbieters) und eine laufende Nummer des Gegenschlüssels.

8. Entwürfler nach Anspruch 6, wobei der dritte Wert ein Steuerwort ist, das durch das Ausführen einer Entschlüsselungsoperation an einem verschlüsselten Steuerwort unter Verwendung des Gegenschlüssels zurückgewonnen wird.

9. Entwürfler nach Anspruch 7, wobei der dritte Wert ein Steuerwort ist, das durch das Ausführen von (i) einer ersten Entschlüsselungsoperation unter Verwendung des Gegenschlüssels an einer ersten Kombination aus einem ersten verschlüsselten Steuerwort und einem zweiten verschlüsselten Steuerwort und (ii) einer zweiten Entschlüsselungsoperation unter Verwendung des Gegenschlüssels an einer zweiten Kombination aus einem dritten verschlüsselten Steuerwort und mehreren Bits, die als Füllung für die zweite Kombination funktionieren, damit sie wenigstens 128 Bit lang ist, zurückgewonnen wird.

10. Entwürfler nach Anspruch 1, der ferner eine dritte kryptographische Einheit umfasst, um den entwürfelten ankommenden Inhalt vor der Übertragung zu einer digitalen Vorrichtung zu verschlüsseln.

11. Entwürfler nach Anspruch 10, der ferner eine Kopierschutz-Leiterlogik umfasst, um einen Kopierschutzschlüssel zu erzeugen, der durch die dritte kryptographische Einheit verwendet wird, um den entwürfelten ankommenden Inhalt zu verschlüsseln.

12. Entwürfler nach Anspruch 11, wobei die Kopierschutz-Leiterlogik einen Kopierschutzschlüssel durch das Ausführen einer Entschlüsselungsoperation an einer Verkettung aus einem Zufallswert und mehreren Bits unter Verwendung einer logischen Ableitung, die ein Ergebnis einer Exklusiv-ODER-Operation (XOR-Operation) des eindeutigen Schlüssels und eines vorgegebenen Wertes ist, um ein Ergebnis zu erzeugen, das wenigstens 128 Bit lang ist, zu erzeugen.

13. Entwürfler nach Anspruch 1, wobei der zweite Wert aus einem Gegenschlüsselgenerator zurückgewonnen wird, der einer kryptographischen Operation unter Verwendung des ersten Werts unterzogen wird.

14. Entwürfler nach Anspruch 13, wobei der dritte Wert ein Steuerwort ist, das durch Entschlüsseln eines verschlüsselten Steuerworts unter Verwendung des zweiten Werts zurückgewonnen wird.

15. Entwürfler nach Anspruch 1, wobei die zweite kryptographische Einheit die außerhalb des Bandes durch eine digitale Vorrichtung, die bei dem Entwürfler implementiert ist, empfangenen ankommenden verschlüsselten Programmdaten zu entschlüsseln.

16. Entwürfler nach Anspruch 15, wobei die verschlüsselten Programmdaten eine verschlüsselte Berechtigungsmanagementnachricht umfassen, die wenigstens zwei der Folgenden umfasst: (i) einen Smartcard-Identifizierer, (ii) ein Längenfeld, (iii) einen Gegenschlüsselgenerator, (iv) wenigstens einen Schlüsselidentifizierer und (v) wenigstens einen Schlüssel, der dem wenigstens einen Schlüsselidentifizierer zugeordnet ist.

17. Entwürfler nach Anspruch 12, wobei die Kopierschutz-Leiterlogik, um einen Kopierschutzschlüssel basierend auf mehreren Prozessblöcken zu erzeugen, wobei
ein erster Prozessblock konfiguriert ist, einen abgeleiteten Schlüssel basierend auf einem zweiten Zufallswert und entweder dem eindeutigen Schlüssel oder einer logischen Ableitung des eindeutigen Schlüssels zu erzeugen,
ein zweiter Prozessblock konfiguriert ist, einen Anwenderschlüssel aus einem verschlüsselten Anwenderschlüssel unter Verwendung des abgeleiteten Schlüssels zurückzugewinnen, und
ein dritter Prozessblock konfiguriert ist, den Kopierschutzschlüssel von einem Kopierschutzschlüsselgenerator unter Verwendung des Anwenderschlüssels zu erzeugen.

18. Entwürfler nach Anspruch 10, wobei die dritte kryptographische Einheit den entwürfelten ankommenden Inhalt unter Verwendung des Kopierschutzschlüssels vor der Übertragung zu einer digitalen Vorrichtung verschlüsselt.

19. Entwürfler nach Anspruch 17, wobei der nichtflüchtige Speicher ein einmal programmierbarer nichtflüchtiger Speicher ist, der an die Steuerwortschlüssel-Leiterlogik und die Kopierschutz-Leiterlogik gekoppelt ist.

20. Entwürfler nach Anspruch 19, der ferner einen Speicher umfasst, um den Kopierschutzschlüssel zu speichern, wobei der Speicher an die dritte kryptographische Einheit gekoppelt ist.

21. Entwürfler nach Anspruch 17, wobei die Kopierschutz-Leiterlogik ferner Folgendes umfasst:
einen vierten Prozessblock, der konfiguriert ist, einen zweiten abgeleiteten Schlüssel basierend auf einem Zufallswert und dem eindeutigen Schlüssel zu erzeugen;
einen fünften Prozessblock, der konfiguriert ist, einen verschlüsselten Anwenderschlüssel unter Verwendung des zweiten abgeleiteten Schlüssels zu entschlüsseln, um einen Anwenderschlüssel zurückzugewinnen; und
einen sechsten Prozessblock, der konfiguriert ist, unter Verwendung des Anwenderschlüssels aus einem Kopierschutzschlüsselgenerator einen Kopierschutzschlüssel zu erzeugen.

22. Verfahren zum Entwürfeln verwürfelten Inhalts, wobei das Verfahren Folgendes umfasst:
Erzeugen eines ersten Werts (1124), der basierend auf einem Zufallswert (1200) für den bedingten Zugriff (CA-Zufallswert) und einem eindeutigen Schlüssel (1122), der in einem nichtflüchtigen Speicher (1120) gespeichert ist, erzeugt wird;
Erzeugen eines zweiten Werts (1335), der unter Verwendung des ersten Werts erzeugt wird;
Erzeugen eines dritten Werts (1126), der unter Verwendung des zweiten Werts zurückgewonnen wird;
Entwürfeln des in einem verwürfelten Format ankommenden Inhalts (1220) basierend auf dem dritten Wert; und
Entschlüsseln der ankommenden verschlüsselten Daten (1215) unter Verwendung des ersten Wertes.

## Revendications

1. Désembrouilleur comprenant :
une mémoire rémanente (1120) pour stocker une clé unique (1122) ;
une logique d'échelle de clé de mot de commande (1130) pour produire (i) une première valeur (1124) générée en fonction d'une valeur aléatoire d'accès conditionnel (CA) (1200) et de la clé unique (1122), (ii) une deuxième valeur (1335) générée en utilisant la première valeur, et (iii) une troisième valeur (1126) récupérée en utilisant la deuxième valeur ;
une première unité cryptographique (1150) pour désembrouiller un contenu entrant (1220) dans un format brouillé en fonction de la troisième valeur ; et
une deuxième unité cryptographique (1170) pour décrypter des données cryptées entrantes (1215) en utilisant la première valeur.

2. Désembrouilleur selon la revendication 1, celui-ci étant un circuit intégré unique.

3. Désembrouilleur selon la revendication 1, mis en oeuvre dans un décodeur.

4. Désembrouilleur selon la revendication 1, dans lequel la première valeur est une clé dérivée générée en exécutant une opération de décryptage sur la valeur aléatoire CA en utilisant la clé unique.

5. Désembrouilleur selon la revendication 1, dans lequel la première valeur est une clé dérivée, dérivée en exécutant une opération de décryptage sur une combinaison de la valeur aléatoire CA et de données de bourrage, la combinaison étant au moins de 128 bits de long.

6. Désembrouilleur selon la revendication 4, dans lequel la deuxième valeur est une clé correspondante récupérée en exécutant une opération de décryptage sur un générateur de clé correspondante en utilisant la clé dérivée, le générateur de clé correspondante étant un message comprenant un ou plusieurs des éléments suivants :
identifiant de constructeur, identifiant de fournisseur de service, identifiant de fournisseur d'accès conditionnel (CA) et numéro de séquence de clé correspondante.

7. Désembrouilleur selon la revendication 5, dans lequel la seconde valeur est une clé correspondante récupérée en exécutant une opération de décryptage sur au moins 128 bits de données comprenant un générateur de clé correspondante étant un message comprenant un ou plusieurs des éléments suivants : identifiant de constructeur, identifiant de fournisseur de service, identifiant de fournisseur d'accès conditionnel (CA) et numéro de séquence de clé correspondante.

8. Désembrouilleur selon la revendication 6, dans lequel la troisième valeur est un mot de commande récupéré en exécutant une opération de décryptage sur un mot de commande crypté en utilisant la clé correspondante.

9. Désembrouilleur selon la revendication 7, dans lequel la troisième valeur est un mot de commande récupéré en exécutant (i) une première opération de décryptage en utilisant la clé correspondante sur une première combinaison d'un premier mot de commande crypté et d'un second mot de commande crypté, et (ii) une seconde opération de décryptage en utilisant la clé correspondante sur une seconde combinaison d'un troisième mot de commande crypté et une pluralité de bits servant de bourrage pour que la seconde combinaison soit au moins de 128 bits de long.

10. Désembrouilleur selon la revendication 1, comprenant en outre une troisième unité cryptographique pour crypter le contenu entrant désembrouillé avant la transmission à un dispositif numérique.

11. Désembrouilleur selon la revendication 10, comprenant en outre une logique d'échelle de protection de copie servant à produire une clé de protection de copie utilisée par la troisième unité cryptographique pour crypter le contenu entrant désembrouillé.

12. Désembrouilleur selon la revendication 11, dans lequel la logique d'échelle de protection de copie par produire une clé de protection de copie en exécutant une opération de décryptage sur une concaténation d'une valeur aléatoire et une pluralité de bits pour produire un résultat d'une longueur d'au moins 128 bits, en utilisant une dérivée logique étant un résultat d'une opération OU exclusif (XOR) de la clé unique et d'une valeur prédéterminée.

13. Désembrouilleur selon la revendication 1, dans lequel la deuxième valeur est récupérée à partir d'un générateur de clé correspondante subissant une opération cryptographique en utilisant la première valeur.

14. Désembrouilleur selon la revendication 13, dans lequel la troisième valeur est un mot de commande récupéré en décryptant un mot de commande crypté en utilisant la deuxième valeur.

15. Désembrouilleur selon la revendication 1, dans lequel la deuxième unité cryptographique pour décrypter des données de programme cryptées entrantes reçues hors bande par un dispositif numérique mis en oeuvre avec le désembrouilleur.

16. Désembrouilleur selon la revendication 15, dans lequel les données de programme cryptées comprennent un message de gestion d'habilitation crypté qui comprend au moins deux éléments parmi (i) un identifiant de carte à puce, (ii) un champ de longueur, (iii) un générateur de clé correspondante, (iv) au moins un identifiant de clé et (v) au moins une clé associée à l'au moins un identifiant de clé.

17. Désembrouilleur selon la revendication 12, dans lequel la logique d'échelle de protection de copie pour produire une clé de protection de copie basée sur une pluralité de blocs de traitement, dans lequel :
un premier bloc de traitement est configuré pour générer une clé dérivée en fonction d'une seconde valeur aléatoire et de soit la clé unique, soit une dérivée logique de la clé unique,
un deuxième bloc de traitement est configuré pour récupérer une clé d'utilisateur à partir d'une clé d'utilisateur cryptée en utilisant la clé dérivée,
et
un troisième bloc de traitement est configuré pour générer la clé de protection de copie à partir d'un générateur de clé de protection de copie en utilisant la clé d'utilisateur.

18. Désembrouilleur selon la revendication 10, dans lequel la troisième unité cryptographique crypte le contenu entrant désembrouillé en utilisant la clé de protection de copie avant la transmission à un dispositif numérique.

19. Désembrouilleur selon la revendication 17, dans lequel la mémoire non volatile est une mémoire rémanente programmable une fois couplée à la logique d'échelle de clé de mot de commande et à la logique d'échelle de protection de copie.

20. Désembrouilleur selon la revendication 19, comprenant en outre une mémoire pour stocker la clé de protection de copie, la mémoire étant couplée à la troisième unité cryptographique.

21. Désembrouilleur selon la revendication 17, dans lequel la logique d'échelle de protection de copie comprend en outre
un quatrième bloc de traitement configuré pour générer une seconde clé dérivée en fonction d'une valeur aléatoire et de la clé unique ;
un cinquième bloc de traitement configuré pour décrypter une clé d'utilisateur cryptée en utilisant la seconde clé dérivée pour récupérer une clé d'utilisateur ; et
un sixième bloc de traitement configuré pour générer une clé de protection de copie à partir d'un générateur de clé de protection de copie en utilisant la clé d'utilisateur.

22. Procédé de désembrouillage d'un contenu brouillé, le procédé comprenant :
la production d'une première valeur (1124) générée en fonction d'une valeur aléatoire d'accès conditionnel (CA) (1200) et d'une clé unique (1122) stockée dans une mémoire rémanente (1120) ;
la production d'une deuxième valeur (1335) générée en utilisant la première valeur ;
la production d'une troisième valeur (1126) récupérée en utilisant la deuxième valeur ;
le désembrouillage d'un contenu entrant (1220) dans un format brouillé en fonction de la troisième valeur ; et
le décryptage des données cryptées entrantes (1215) en utilisant la première valeur.
